# FASCICULE DE BREVET EUROPEEN

(11) **EP 2 306 668 B1**
(45) Date de publication et mention de la délivrance du brevet: **17.08.2016**
(21) Numéro de dépôt: 10012098.9
(22) Date de dépôt: 30.09.2010
(51) Int. Cl.: H04L 9/08

(54) **Système et procédé de transaction sécurisée en ligne**
System und Verfahren einer gesicherten Online-Transaktion
System and method for secure on-line transactions

(30) Priorité: 30.09.2009 FR 0904662
(43) Date de publication de la demande: 06.04.2011
(73) Titulaire: Ingenico Group, 75015 Paris (FR)
(72) Inventeur: Martin, Patrice, 75014 Paris (FR); Choiset, Bruno, 78640 Villiers Saint Frédéric (FR); Cogneau, Laurent, 92500 Rueil-Malmaison (FR)
(74) Mandataire: Vidon Brevets & Stratégie

(56) Documents cités:
- EP-A2- 1 850 297
- WO-A2-01/82246
- WO-A2-2005/001618
- "EMV - Integrated Circuit Card Specifications for Payment Systems. Book 2: Security and Key Management", INTERNET CITATION, 1 juin 2008 (2008-06-01), page 176PP, XP007913922, Extrait de l'Internet: URL:http://www.iro.umontreal.ca/~salvail/s ecurite/notes2010/EMVv4.2Book2.pdf [extrait le 2010-07-14]

## Description

La présente invention concerne le domaine des transmissions sécurisées de données via au moins un réseau de communication, tel que le réseau Internet par exemple. Les transmissions permettent par exemple de réaliser des opérations« en ligne » (ou « on line » selon la terminologie anglo-saxonne), en se connectant sur au moins un serveur grâce à au moins un terminal approprié, via au moins un réseau de communication.

La présente invention tire avantage des cartes à puce sécurisées, comme par exemple les « cartes bancaires » ou « cartes à puce de paiement », notamment telles que celles connues sous le nom de EMV (pour « Europay Mastercard Visa ») permettant de sécuriser les paiements réalisés grâce à la puce (par exemple de type ISO 7816) de la carte comportant au moins une clé de cryptage et éventuellement grâce au code d'identification associé (numéro d'identification personnel, PIN pour « Personal Identification Number » selon la terminologie anglo-saxonne). On notera que la présente invention est particulièrement adaptée pour réaliser des transactions en ligne, mais qu'elle peut également être utilisée pour divers types d'échanges sécurisés d'informations. Ainsi par exemple, la présente invention est adaptée à l'utilisation d'autres cartes, par exemple telles que les cartes vitales, les cartes des professionnels de santé (CPS) ou tout autre type de carte dont la puce stocke au moins une clé de cryptage, de manière à sécuriser des échanges de données de n'importe quel type (ces échanges étant regroupés ici sous le terme « transaction »). En fait, l'invention peut éventuellement évoluer en fonction de l'évolution des standards des cartes, notamment les cartes EMV, et l'on parlera dans la présente demande d'une manière générale de « carte sécurisée » pour désigner de telles cartes à puce comportant au moins une clé symétrique de cryptage stockée dans la puce et munies de capacités cryptographiques par clé symétrique, contrairement aux cartes de type PKI ("Public Key Infrastructure" selon la terminologie anglo-saxonne, désignant une infrastructure permettant la gestion et l'utilisation de certificats numériques liant des clés publiques à l'identité d'un utilisateur) connues de l'art antérieur qui utilisent des clés asymétriques et présentent des inconvénients mentionnés ci-après.

Un problème dans le domaine des transactions sécurisées concerne les attaques possibles, par exemple par des pirates informatiques, pour atteindre les données sensibles des transactions comme les informations bancaires etc. De nombreuses attaques informatiques reposent sur l'ingénierie sociale (c'est-à-dire le manque de connaissances techniques du public, qui ne connaît pas les mécanismes de sécurité et peut donc par exemple utiliser les mécanismes d'une manière qui risque de les rendre vulnérables). On connaît en particulier les virus informatiques qui sont des programmes informatiques écrits dans le but de se propager à d'autres ordinateurs en s'insérant dans des programmes légitimes appelés « hôtes ». Ils peuvent aussi avoir comme effet, recherché ou non, de nuire en perturbant plus ou moins gravement le fonctionnement de l'ordinateur infecté. Ils peuvent se répandre à travers tout moyen d'échange de données numériques comme l'internet, mais aussi les disquettes, les cédéroms, les clefs USB, etc. Il existe également des attaques connues sous le nom de « l'hameçonnage », ou « appâtage » (« phishing, selon la terminologie anglo-saxonne) utilisée par des fraudeurs pour obtenir des renseignements personnels dans le but de perpétrer une usurpation d'identité. La technique consiste à faire croire à la victime qu'elle s'adresse à un tiers de confiance (banque, administration, etc.) afin de lui soutirer des renseignements personnels (mot de passe, numéro de carte de crédit, date de naissance, etc.). L'hameçonnage peut se faire par courrier électronique, par des sites web falsifiés ou autres moyens électroniques. Il est connu également des attaques appelées « pharming » en anglais, exploitant des vulnérabilités DNS (« Domain Name System » selon la terminologie anglo-saxonne) pour récupérer les données d'une victime. Il s'agit d'un type d'hameçonnage qui permet de voler des informations après avoir attiré la victime sur un site web maquillé, même si le nom de domaine est correctement saisi. Les pirates auront préalablement modifié la correspondance entre le nom de domaine et l'adresse IP. Ainsi, par exemple www.mabanque.fr ne pointera plus vers l'adresse IP du serveur de « ma banque » mais vers un autre serveur frauduleux. D'autres types d'attaques sont connues sous le nom d'enregistreur de frappe (« keylogger » selon la terminologie anglo-saxonne) par lesquelles un équipement ou un logiciel espion enregistre les touches frappées sur le clavier d'un ordinateur sous certaines conditions et les transmet, notamment pour permettre une utilisation frauduleuse. Il est connu également des attaques connues sous le nom de « l'homme du milieu » (HDM) (ou « man in the middle attack », MITM, selon la terminologie anglo-saxonne) qui a pour but d'intercepter les communications entre deux parties, sans que ni l'une ni l'autre ne puisse se douter que le canal (CS) de communication entre elles a été compromis. L'attaquant doit d'abord être capable d'observer et d'intercepter les messages d'une victime à l'autre. L'attaque "homme du milieu" est particulièrement applicable dans le protocole original d'échange de clés Diffie-Hellman, quand il est utilisé sans authentification. Il est connu également des attaques connues sous le nom de « l'homme du navigateur » (ou « man in the browser » selon la terminologie anglo-saxonne) qui sont une forme récente de menaces liées aux attaques de l'homme du milieu, et reposent sur un cheval de Troie (logiciel malveillant d'apparence légitime, conçu pour exécuter des actions à l'insu de l'utilisateur, en général en utilisant des droits appartenant à son environnement pour détourner, diffuser ou détruire des informations, ou encore pour ouvrir une porte dérobée qui permettra à un attaquant de prendre à distance le contrôle d'un ordinateur). Ces attaques infectent par exemple un navigateur internet et permettent de modifier les pages, de modifier le contenu ou des transactions ou d'insérer d'autres transactions, le tout dans un mode totalement invisible par l'utilisateur et l'application hôte. Ces attaques sont particulièrement dangereuses car elles sont généralement couronnées de succès même lorsque sont utilisés des mécanismes de sécurité comme le SSL, la PKI ("Public Key Infrastructure" selon la terminologie anglo-saxonne désignant une infrastructure permettant la gestion et l'utilisation de certificats numériques liant des clés publiques à l'identité d'un utilisateur) et/ou l'utilisation de d'authentification de deux ou trois facteurs.

Il est connu dans l'art antérieur diverses solutions pour réaliser des transactions sécurisées sur internet. Cependant, la plupart des solutions connues restent vulnérables à au moins une des attaques connues. Il est connu par exemple des solutions utilisant des « dongle » (matériel informatique telle qu'une clé à connecter à un ordinateur, par exemple en USB, « Universal Serial Bus ») ou objets portables ou des cartes à puces et/ou des lecteurs de cartes à puce agencés pour sécuriser des opérations. Cependant, ce type de solution présente l'inconvénient de généralement utiliser des certificats, tels que ceux des protocoles SSL/TLS par exemple, dont l'utilisateur ne peut généralement pas vérifier l'authenticité et qui sont donc vulnérables à certaines des attaques décrites. De plus, ces solutions présentent l'inconvénient de nécessiter le déploiement d'une infrastructure réseau supportant l'utilisation de ces dispositifs pour l'authentification (gestion des certificats distribués, etc.). En effet, divers protocoles relativement sûrs, tels que le SSL/TLS, se trouvent détournés à cause des problèmes d'ingénierie sociale précédemment cités car les utilisateurs acceptent n'importe quel certificat qui leur est soumis.

Il est connu également des solutions consistant à créer un canal sécurisé (ou « tunnel » sécurisé), c'est-à-dire un canal (CS) de communication crypté, entre les 2 entités en relation lors de la transaction (banque-utilisateur, par exemple). Cependant, ce type de solution présente également l'inconvénient de rester vulnérable à certaines attaques car le canal sécurisé repose sur l'utilisation de certificats tels que ceux des protocoles SSL/TLS.

Enfin, il est connu, notamment des documents WO 2005/001618, EP 1 850 297 et WO 01/82246, des solutions connues comme étant compatibles avec le Programme d'Authentification par Carte (PAC, ou CAP pour « Chip Authentication Program » selon la terminologie anglo-saxonne) et utilisant un lecteur de carte bancaire connecté au terminal (ordinateur par exemple) de l'utilisateur et dans lequel ce dernier insère une carte bancaire pour permettre la signature des transactions par la puce de cette carte. Cependant, ce type de solution présente l'inconvénient d'être vulnérable à certaines attaques car les informations sensibles transitent par le terminal qui commande au lecteur la signature de la transaction par la carte. Par exemple, un problème de cette solution est lié à l'ingénierie sociale car il est du au fait que l'utilisateur ne vérifie en général pas les informations affichées sur le lecteur et se contente d'y valider la transaction en se fiant à l'affichage sur son terminal, alors qu'une attaque, par exemple du type de l'homme du navigateur, aura pu détourner les informations à valider sur le lecteur tout en affichant des informations normales sur le terminal.

Dans ce contexte, il existe un besoin pour des solutions simples, économiques et faciles à mettre en oeuvre, notamment pour le grand public, permettant de sécuriser les transactions en ligne, contrairement aux solutions connues souvent trop chères, trop complexes d'utilisation et de mise en oeuvre notamment pour le grand public, en particulier à cause des problèmes liés à l'ingénierie sociale.

Un but de la présente invention est donc de pallier au moins certains inconvénients de l'art antérieur en proposant un système permettant d'initialiser des transactions sécurisées en ligne.

Ce but est atteint par un système d'initialisation de transaction sécurisée en ligne, via au moins un réseau de communication, le système comportant au moins un équipement d'un fournisseur de services comprenant au moins un serveur agencé pour gérer des transactions en ligne, par l'échange de données représentatives de transactions, ledit équipement comprenant également au moins un module de sécurité, agencé pour sécuriser ces transactions, caractérisé en ce que :
- ledit système comporte au moins un lecteur de carte à puce accédant à l'équipement fournisseur via ledit réseau de communication et comprenant des moyens de traitement agencés pour, d'une part, échanger des données avec au moins une puce d'au moins une carte sécurisée, afin d'obtenir de la puce et transmettre au module de sécurité des données, dites publiques, représentatives d'au moins une information liée à la carte et, d'autre part, pour générer, en coopération avec ladite puce, au moins une clé de session, et transmettre au module de sécurité des données cryptées à l'aide cette clé de session,
- le module de sécurité est agencé pour calculer ladite clé de session, à partir desdites données publiques reçues et d'au moins une clé de cryptage,
- le calcul de la clé de session par le lecteur et le module de sécurité permettant l'initialisation de la transaction en établissant un canal de communication sécurisé dans lequel les données représentatives de la transaction pourront transiter sous forme cryptée par ladite clé de session.

Selon une autre particularité, la puce de la carte est agencée pour générer, à partir d'au moins une clé de cryptage stockée dans la puce, au moins un cryptogramme utilisé par les moyens de traitement du lecteur agencés pour générer la clé de session servant à l'établissement du canal sécurisé.

Selon une autre particularité:
- le module de sécurité utilise au moins une clé, dite clé mère ayant servi à la génération des clés des cartes sécurisées fournies par le fournisseur de service, dites clés filles, chacune des cartes fournies étant identifiable à partir d'au moins une information contenue dans les données publiques,
- les moyens de traitement du lecteur transmettent au module de sécurité les données publiques pour lui permettre de trouver la clé de cryptage à utiliser pour calculer la clé de session.

Selon une autre particularité, l'équipement du fournisseur de service comporte au moins une base de données stockant les clés de cryptage des cartes sécurisées fournies par le fournisseur de service, le module de sécurité accédant à cette base de données pour trouver, en fonction des données publiques reçues du lecteur de carte à puce, la clé de cryptage à utiliser pour calculer la clé de session.

Selon une autre particularité, le lecteur et l'équipement fournisseur sont mis en relation au travers d'une communication sécurisée selon un protocole de type SSL/TLS au sein de laquelle est établi le canal sécurisé.

Selon une autre particularité, les moyens de traitement du lecteur sont agencés pour recevoir du module de sécurité et traiter au moins une commande d'initialisation du canal sécurisé comprenant un nombre imprédictible et induisant l'interrogation de la puce par le lecteur, pour obtenir au moins un cryptogramme et les données représentatives d'informations liées à la carte, ce qui permet aux moyens de traitement du lecteur de générer la clé de session servant à établir le canal de communication sécurisé et de transmettre au module de sécurité, d'une part, les données représentatives d'informations liées à la carte et, d'autre part, lesdites données cryptées à l'aide cette clé de session, qui comportent des données relatives au nombre imprédictible.

Selon une autre particularité, l'initialisation de la transaction fait suite à une transmission au serveur de l'équipement fournisseur d'au moins une partie des données représentatives de la transaction, par un serveur tiers gérant un site Internet sur lequel l'utilisateur s'est connecté.

Selon une autre particularité, le serveur de l'équipement fournisseur est agencé pour gérer l'établissement et l'utilisation du canal sécurisé en traitant et conservant un nombre imprédictible, la clé de session, un numéro de session généré à l'établissement du canal sécurisé et qui est lié au nombre imprédictible et à un compteur de transaction de la carte, ainsi qu'un numéro de séquence incrémenté à chaque commande envoyée au lecteur, au cours de chaque session.

Selon une autre particularité, le module de sécurité de l'équipement fournisseur est agencée pour stocker la clé de session dans des moyens de mémorisation et/ou pour crypter la clé de session à l'aide d'une clé, dite clé maître, et la transmettre au serveur pour stockage sous forme cryptée dans des moyens de mémorisation.

Un autre but de la présente invention est de pallier au moins certains inconvénients de l'art antérieur en proposant un système permettant de sécuriser les transactions en ligne.

Ce but est atteint par un système de transaction sécurisée, comportant un système d'initialisation selon l'invention, dans lequel le lecteur et le module de sécurité sont agencés pour crypter et décrypter, par ladite clé de session, les données représentatives de la transaction qu'ils s'échangent au cours de la transaction, ces données transitant alors par le canal de communication sécurisé grâce à ces cryptages/ décryptages.

Selon une autre particularité, le serveur est agencé pour requérir du module de sécurité, à chaque transmission de données avec le lecteur, un cryptage/décryptage par ladite clé de session des données transmises, le lecteur étant agencé pour crypter/décrypter également les données échangées au cours de la transaction.

Un autre but de la présente invention est de pallier au moins certains inconvénients de l'art antérieur en proposant un procédé permettant d'initialiser des transactions sécurisées en ligne.

Ce but est atteint par un procédé d'initialisation de transaction sécurisée en ligne, via au moins un réseau de communication, mis en oeuvre par un système d'initialisation de transaction sécurisée selon l'invention, caractérisé en ce qu'il comporte au moins une étape d'établissement d'au moins un canal de communication sécurisé entre le module de sécurité et le lecteur qui est mise en oeuvre grâce aux étapes suivantes :
- génération d'au moins une clé de session, par les moyens de traitement du lecteur, en coopération avec la carte, puis cryptage de données à l'aide de cette clé de session,
- obtention, par le lecteur, à partir de la puce de la carte, de données représentatives d'informations liées à la carte,
- transmission, du lecteur au module de sécurité, des données représentatives d'informations liées à la carte et des données cryptées à l'aide de la clé de session,
- génération, par le module de sécurité, de la clé de session à partir d'au moins une clé de cryptage du module de sécurité et des données reçues.

Selon une autre particularité, l'étape de génération d'au moins une clé de session, par les moyens de traitement du lecteur est précédée par une étape de génération(51), par la puce de la carte, d'au moins un cryptogramme à partir de la clé de cryptage stockée dans la puce et de transmission de ce(s) cryptogramme(s) au lecteur générant la clé de session à partir de ce(s) cryptogramme(s).

Selon une autre particularité, le procédé comporte au moins une étape de saisie, par l'utilisateur de la carte, d'au moins un code d'identification personnelle de l'utilisateur, et d'authentification de ce code par la puce de la carte, cette étape de saisie/authentification permettant au moins une étape de signature de données par la puce.

Selon une autre particularité, le procédé comporte au moins une étape de réception et traitement, par les moyens de traitement du lecteur, d'au moins une commande d'initialisation du canal sécurisé envoyée par lu module de sécurité, comprenant un nombre imprédictible et induisant l'interrogation de la puce par le lecteur, pour obtenir au moins un cryptogramme et les données représentatives d'informations liées à la carte, cette étape permettant l'étape de génération de la clé de session servant à établir le canal de communication sécurisé et la transmission au module de sécurité, d'une part, des données représentatives d'informations liées à la carte et, d'autre part, et, d'autre part, lesdites données cryptées à l'aide cette clé de session, qui comportent des données relatives au nombre imprédictible.

Un autre but de la présente invention est de pallier au moins certains inconvénients de l'art antérieur en proposant un procédé permettant de sécuriser les transactions en ligne.

Ce but est atteint par un procédé de transaction sécurisée, caractérisé en ce qu'il comporte les étapes du procédé d'initialisation selon l'invention et au moins une étape de transmission de données entre le module de sécurité et le lecteur, sous forme cryptée grâce à ladite clé de session, mise en oeuvre dans un système de transaction sécurisée selon l'invention.

Selon une autre particularité, le serveur est agencé pour requérir du module de sécurité, à chaque étape de transmission de données avec le lecteur, un cryptage/décryptage par ladite clé de session des données transmises, le lecteur étant agencé pour crypter/décrypter également les données échangées au cours de la transaction.

D'autres particularités et avantages de la présente invention apparaîtront plus clairement à la lecture de la description ci-après, faite en référence aux dessins annexés, dans lesquels :
- la figure 1 représente un mode de réalisation du système selon l'invention,
- la figure 2 représente un mode de réalisation du procédé selon l'invention
- la figure 3 représente un mode de réalisation du procédé selon l'invention jusqu'à l'établissement du canal sécurisé,
- la figure 4 représente la suite du mode de réalisation du procédé de la figure 3, à partir de l'établissement du canal sécurisé.

La présente invention concerne d'une part un système et un procédé d'initialisation de transaction sécurisée en ligne, grâce à l'établissement d'un canal sécurisé décrit ci-après. La présente invention concerne d'autre part un système et un procédé de transaction sécurisée en ligne, c'est-à-dire de transmissions de données sécurisées, reposant sur un tel canal sécurisé. A titre d'exemples illustratifs et non limitatifs, les données transmises pourront concerner des opérations permettant la consultation et la gestion d'opérations bancaires courantes en ligne (« e-banking ») et/ou permettant la souscription à des produits financiers en ligne (« e-subscription ») et/ou permettant la validation de demandes de prélèvement auprès d'un destinataire autorisé, comme par exemple avec les titres interbancaires de paiement, TIP (« e-billing ») ou le et/ou permettant le paiement d'achats en ligne (« e-commerce »), utilisant par exemple un protocole de paiement sécurisé sur Internet tel que le protocole « 3-Dsecure ». L'invention est particulièrement avantageuse car elle se propose de sécuriser les transactions en proposant un mécanisme résistant à la plupart des attaques connues et permettant de s'astreindre des problèmes d'ingénierie sociale. Le terme « transaction » désigne, dans la présente demande, tout type de transmission de données via au moins un réseau de communication, ces transmissions étant sécurisées grâce à la présente invention. Ainsi, le terme « transaction » pourra concerner une transaction par exemple de type bancaire (par exemple un paiement en ligne, etc.) mais pourra concerner en fait d'autres types de transmissions de données (par exemple dans le cas d'envoi d'informations personnelles, notamment lors de l'utilisation d'une carte vitale ou autre). Ces « transactions » sont désignées ici comme étant effectuées entre au moins un utilisateur et au moins une entité désignée sous le terme de « fournisseur de service » (par exemple un établissement bancaire, un organisme privé ou public, etc.), qui possède un équipement (un ensemble de dispositifs par exemple) spécifique pour la mise en oeuvre de l'invention, désigné sous le terme « d'équipement (4) fournisseur » (ou « équipement (4) du fournisseur de service »), comme détaillé ci-après. Le fournisseur de service aura fourni aux utilisateurs de la présente invention une carte (2) dite « sécurisée » (comme expliqué ci-après) et un lecteur (1) de carte spécifique, pour leur permettre de réaliser les transactions en ligne. La carte (2) et le lecteur (1) sont désignés comme étant « fournis » par le fournisseur de service mais il apparaîtra à la lecture de la présente demande que l'invention n'est pas limitée à la façon dont les utilisateurs les ont obtenus, ce terme étant utilisé pour expliquer que le fournisseur de service connaît les cartes des utilisateurs (par exemple grâce à au moins une base de données stockant des identifiants d'utilisateurs et de carte), comme expliqué en détail ci-après et possède un équipement (4) fournisseur agencé pour coopérer avec les lecteurs (1) de carte lors des transactions, comme expliqué ci-après.

Comme mentionné précédemment, la présente invention permet divers types de transactions telles que, à titre d'exemples illustratifs et non limitatifs, celles connues sous les noms de « e-banking », « e-subscription », « e-billing » ou le « e-commerce ». Le e-commerce utilise par exemple le protocole « 3D-secure » qui permet une authentification du détenteur d'une carte de paiement lors d'achats effectués sur des sites web, et consiste à lier le processus d'autorisation financière avec une authentification en ligne basée sur un modèle comportant 3 domaines (le domaine de l'acquéreur, c'est-à-dire en général le domaine du commerçant et de la société qui l'a affilié au réseau de paiement ; le domaine de l'émetteur, c'est-à-dire en général le domaine du porteur de la carte et de la société (souvent sa banque) qui a émis sa carte ; le domaine de l'interopérabilité, c'est-à-dire en général celui de l'opérateur du réseau de paiement assurant l'interopérabilité entre les deux premiers domaines et s'assure que les flux financiers aboutissent bien là où ils doivent aboutir). Ce protocole repose sur des messages envoyés via des communications sécurisées par exemple grâce à des protocoles de type SSL (« Secure Sockets Layer » selon la terminologie anglo-saxonne), ou TLS (« Transport Layer Security » selon la terminologie anglo-saxonne) qui garantissent l'authentification du serveur et du client par des certificats numériques. On notera que la présente invention pourra être compatible avec le Programme d'Authentification par Carte (PAC, ou CAP pour « Chip Authentication Program » selon la terminologie anglo-saxonne) qui fournit des spécifications techniques relatives à l'utilisation de cartes à puce bancaires pour l'authentification des utilisateurs et des transactions bancaires en ligne et par téléphone. Il a également été adopté en tant que mot de passe d'authentification dynamique (DPA). Les clients des banques qui ont reçu un lecteur CAP de leur banque peuvent insérer leur carte bancaire dans le lecteur CAP, afin de participer à l'un des protocoles d'authentification soutenus par ces spécifications. Le CAP est une forme d'authentification utilisant deux facteurs à la fois, car la carte à puce et un PIN valide doivent être présentés pour qu'une opération puisse réussir, selon plusieurs méthodes supportées. Cependant, comme mentionné dans le préambule de la présente demande, les méthodes supportées par les spécifications CAP présentent l'inconvénient de rester vulnérables à certaines attaques alors que la présente invention se conforme aux exigences de sécurité du CAP mais permet de sécuriser encore plus les transactions.

De plus, comme mentionné précédemment, la présente invention tire avantage des cartes à puce désignées ici sous le terme « carte à puce sécurisée » qui stockent au moins une clé symétrique de cryptage et comportent une puce munie de capacités cryptographiques utilisant des clés symétriques. Il pourra s'agir notamment de cartes bancaires, c'est-à-dire des cartes à puce de paiement telles que celles connues sous le nom de EMV (pour « Europay Mastercard Visa ») permettant de sécuriser les paiements réalisés grâce à la puce (par exemple de type ISO 7816) de la carte comportant au moins une clé de cryptage symétrique. Cependant, l'invention n'est pas limitée aux cartes bancaires (ou carte vitale ou autres) citées ici à titre d'exemple illustratif et non limitatif car l'invention nécessite seulement, en ce qui concerne la carte, que la puce stocke une clé symétrique de cryptage et des données relatives à la carte, et qu'elle possède au moins des capacités de cryptographie symétrique (comme par exemple grâce à au moins une application spécifique implémentée dans la puce de la carte) qui sont mises en oeuvre en réponse à des ordres reçus d'un lecteur accédant à la carte. On notera qu'en variante, il est envisageable que le lecteur et la carte dialoguent via une communication sans contact (la carte n'étant alors pas nécessairement insérée dans le lecteur, mais ce dernier y accède). Le terme « carte sécurisée » sera utilisé dans la présente description pour désigner ces types de cartes. La présente invention ne nécessite donc pas le déploiement de nouvelles entités de cryptage (telles que des « dongles », des clés USB de cryptage ou autre dispositif à connecter à un terminal et stockant une clé de cryptage) et prévoit l'utilisation des cartes sécurisées qui permettent une authentification forte et mutuelle entre l'équipement fournisseur (4) et la puce (20) de la carte, comme détaillé ci-après. L'invention peut donc tirer avantage de cartes qui sont déjà déployées et qui possèdent déjà les moyens nécessaires à sa mise en oeuvre (au niveau de la carte : capacités de cryptographie symétrique, clé de cryptage et données relatives à la carte), comme par exemple les cartes bancaires de type EMV. On notera que dans le cas de cartes sécurisées requérant la saisie d'un code PIN (comme les cartes EMV), on obtient même une authentification forte et mutuelle entre le fournisseur et l'utilisateur lui-même. Grâce aux moyens mis en oeuvre dans la présente invention, l'utilisateur a l'assurance de réaliser une transaction avec son fournisseur de service et ce dernier a également l'assurance de réaliser une transaction avec son client (l'utilisateur ou au moins un utilisateur autorisé, sous réserve que l'utilisateur ne se soit pas voler sa carte et le code PIN associé).

La présente invention requiert l'utilisation d'un lecteur (1) de carte sécurisée, comportant des moyens (12) de traitement de données agencés pour dialoguer avec la puce (20) de la carte (2), notamment pour obtenir de la puce (20) des signatures de données pour l'établissement du canal sécurisé et pour réaliser des transactions réalisées en ligne. De plus, ces moyens (12) de traitement de données sont agencés pour réaliser des opérations cryptographiques sur les données fournies par la puce et pour transmettre à l'équipement (4) fournisseur les données cryptées via un canal (CS) sécurisé.

Le lecteur (1) est (ou ses moyens de traitement sont) en outre agencé(s) pour la mise en place d'un canal (CS) de communication sécurisé (ou « tunnel sécurisé ») avec au moins un module (ou dispositif) de sécurité de l'équipement (4) fournisseur en mode connecté (c'est-à-dire lors d'une communication avec l'équipement fournisseur via au moins un réseau de communication), par exemple selon un algorithme 3DES, par exemple en mode CBC, et avec une clé de session (Kses) précédemment générée. Comme mentionné précédemment, la présente invention utilise une des fonctionnalités des cartes sécurisées permises par au moins une clé de cryptage stockée dans la puce et fournie par le (ou connue du) fournisseur de service. On notera que l'algorithme de chiffrement 3DES (aussi appelé « Triple DES ») qui est un algorithme de chiffrement symétrique enchaînant 3 applications successives de l'algorithme DES (pour « Data Encryption Standard », selon la terminologie anglo-saxonne, qui est un algorithme de chiffrement par bloc) sur le même bloc de données de 64 bits, avec 2 ou 3 clés DES différentes n'est cité ici qu'à titre d'exemple illustratif et non limitatif. De même, le mode CBC (« Cipher Block Chaining » selon la terminologie anglo-saxonne ou « enchaînement des blocs ») qui consiste à appliquer sur chaque bloc un 'OU exclusif avec le chiffrement du bloc précédent avant qu'il soit lui-même chiffré et qui utilise un vecteur d'initialisation pour rendre chaque message unique, n'est cité ici qu'à titre d'exemple illustratif et non limitatif. En effet, on comprendra à la lecture de la présente demande que les méthodes de cryptage utilisées pourront évoluer en fonction des standards et que certains modes de réalisation de la présente invention tirent avantage des sécurités déjà déployées dans les cartes sécurisées.

Les systèmes d'initialisation et de transaction sécurisée en ligne mettent en oeuvre, de façon connue en soi, au moins un réseau (RC) de communication. Par exemple, ce réseau pourra être de type Internet. Dans diverses variantes, l'invention pourra mettre en oeuvre plusieurs réseaux. De plus, les réseaux mis en jeu pourront être de divers types, comme par exemple un réseau de téléphonie mobile (comme par exemple les réseaux de troisième génération) permettant une communication à haut débit avec des terminaux tels que, par exemple, des téléphones mobiles ou des ordinateurs munis de moyens de communication adaptés, etc. Plus classiquement, il pourra s'agir d'un réseau de type Internet, par exemple filaire.

De façon également connue en soi, les transactions en ligne sont en général réalisées à partir d'un terminal (3), tel qu'un ordinateur par exemple, mais peuvent être réalisées à partir d'autres types de terminaux, tels que des téléphones mobiles comportant des moyens de communication et au moins une application de navigation sur le réseau, connue sous le nom de navigateur (ou « browser » selon la terminologie anglo-saxonne). On notera que l'on désigne ici un tel terminal par le terme « terminal utilisateur », mais il est évident qu'un tel terminal peut être la propriété de n'importe quelle entité, qu'il peut correspondre à divers types de terminaux et que cette désignation ne doit pas être interprétée de façon limitative. D'une manière générale, il est évident que la navigation sur un réseau de type Internet peut être réalisée à partir de divers types de terminaux et l'invention ne doit pas être limitée aux exemples non limitatifs donnés ici à titre illustratif. En revanche, la présente invention requérant l'utilisation d'un lecteur (1) de carte sécurisée, il est nécessaire que le terminal (3) puisse soit inclure un tel lecteur directement dans le terminal, soit être relié à ce lecteur par l'intermédiaire d'au moins une connectique adaptée (par exemple mini-USB, comme fréquemment rencontré même sur les terminaux mobiles) et de pilotes (« drivers » selon la terminologie anglo-saxonne) permettant le contrôle d'un tel lecteur, les détails concernant le dialogue entre le terminal et le lecteur en fonction des transmissions de données sur le réseau (via le navigateur) étant fournis plus loin dans la présente description. Aucun détail ne sera donné ici sur les agencements physiques des terminaux et des lecteurs (ni sur les pilotes et autres moyens mis en oeuvre) car l'homme de métier comprendra à la lecture de la présente invention les agencements qui sont possibles sans s'éloigner de l'esprit de l'invention. De plus, l'invention prévoit également des modes de réalisation permettant de se passer d'un terminal (3) sur lequel le lecteur (1) doit être connecté. Dans ces modes de réalisation, le lecteur (1) sera muni de moyens de communication sur au moins un réseau (RC) de communication. Ce lecteur (1), dit « communicant » pourra, dans certaines variantes, intégrer au moins une application permettant la navigation sur le réseau de communication, de façon à permettre à l'utilisateur de se connecter au moins à l'équipement (4) fournisseur. Des versions améliorées permettront la connexion à d'autres serveurs (par exemple des sites marchands, etc.). Dans d'autres variantes, le lecteur (1) ne sera pas muni d'un navigateur (dans sa définition commune de logiciel de navigation) mais sera configuré pour pouvoir se connecter directement à l'équipement (4) fournisseur, par exemple grâce à des moyens de communication (par exemple des moyens de communication sans fils comme sur un réseau de téléphonie mobile), et grâce à des moyens de mémorisation stockant des données lui permettant de se connecter à cet équipement. De telles données pourront par exemple comporter au moins une URL (« Universal Resources Locator ») indiquant l'adresse d'au moins un serveur de l'équipement (4) fournisseur, éventuellement avec un identifiant et un mot de passe. Ces données pourront par exemple être stockées dans des moyens de mémorisation du lecteur (1) lui-même ou dans la puce (20) de la carte (2) sécurisée (et extraites par el lecteur pour la communication avec le fournisseur). L'homme de métier comprendra donc à la lecture de la présente demande que l'invention pourra en fait utiliser un dispositif tel qu'un lecteur de carte sécurisée qui peut être connecté sur un terminal communicant ou former lui-même un tel terminal communicant et que, dans le cas où le lecteur forme lui-même un terminal communicant, le navigateur et le module passerelle (décrits plus loin dans la présente demande) pourront être omis puisque ces derniers servent, respectivement, à se connecter à l'équipement (4) fournisseur et à contrôler la transmission des données du navigateur du terminal vers le lecteur. Néanmoins, dans certains modes de réalisation, le navigateur et le module passerelle pourront être tout de même implémentés dans ce type de lecteur communicant, pour permettre plus de fonctionnalités (notamment dans le cas où le navigateur est un véritable logiciel de navigation qui nécessite l'intégration d'un module passerelle comme décrit dans la présente demande).

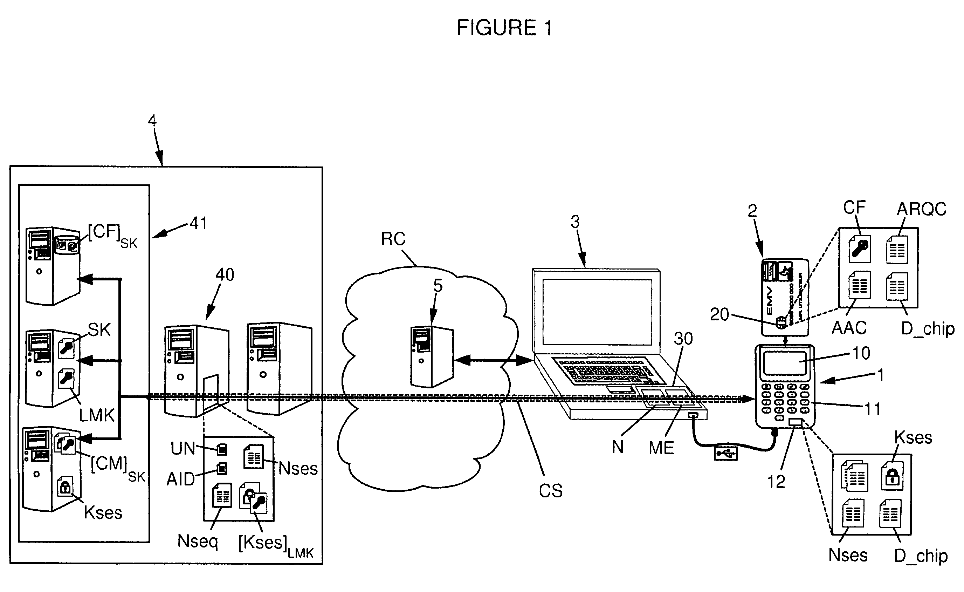

D'autre part, il est également connu que les transactions en ligne mettent en oeuvre au moins un équipement (4) d'un fournisseur de service (par exemple un établissement bancaire ou un organisme privé ou public) comprenant au moins un serveur (40) agencé pour gérer les communications, et en particulier les transactions, avec les navigateurs (N) de terminaux (3). Les transactions en ligne, par exemple telles que celles données à titre d'exemple illustratifs et non limitatifs dans l'exposé du domaine technique (« e-banking », etc.),requièrent en général la connexion de l'utilisateur (via le navigateur d'un terminal ou, selon les variantes décrites ci-dessus, via le lecteur communicant) sur le serveur (40) pour permettre une authentification de l'utilisateur et une autorisation de la transaction par le serveur (40). De plus, l'équipement fournisseur (4) comporte en général dans l'art antérieur également au moins un module de sécurité (41) qui est agencé pour décrypter et vérifier les signatures de transactions fournies par les cartes (ce module pouvant par exemple être implémenté dans au moins un serveur de l'équipement (4) fournisseur). Ce module de sécurité (41) peut, à titre d'exemple illustratif et nullement limitatif, comporter par exemple, comme connu dans le domaine bancaire, une « enceinte cryptographique », qui pourra par exemple être telle que celles connues sous le nom de HSM (pour « Hardware Security Module » selon la terminologie anglo-saxonne) permettant des opérations de décryptage des signatures des transactions et de vérification de ces signatures. En général, un serveur de l'équipement (4) fournisseur pourra stocker éventuellement les données relatives aux transactions et/ou à leur cryptage. De façon connue en soi, l'équipement fournisseur (4) pourra comporter un premier serveur, dit frontal, (comme représenté sur la figure 1) auquel les utilisateurs se connectent pour réaliser des transactions, et un second serveur, dit serveur (40) d'opérations, gérant les sessions de connexion des utilisateurs et les échanges de données requis en fonction des transactions demandées (par l'utilisateur ou un serveur d'un site marchand par exemple), en transmettant les données sensibles au module de sécurité (41) pour chiffrement/déchiffrement. L'homme de métier comprendra donc que l'équipement fournisseur (4) pourra comporter au moins un serveur (40) (par exemple un seul serveur remplissant les fonctions du serveur frontal et du serveur d'opérations) et au moins un module (41) de sécurité (par exemple «enceinte cryptographique », par exemple de type HSM), implémenté dans le même serveur ou (comme représenté sur la figure 1) dans au moins un dispositif différent.

Dans certains modes de réalisation, le lecteur (1) et l'équipement fournisseur (4) sont mis en relation via, respectivement, des moyens de communication, implémentés directement dans le lecteur ou via un terminal (3), par exemple grâce à un navigateur(N) et des moyens de communication d'au moins un serveur (40), au travers d'une communication sécurisée selon un protocole de type SSL/TLS au sein de laquelle est ouvert le canal (CS) sécurisé. Il est connu dans le domaine que les connexions des utilisateurs sur les serveurs de leur fournisseur(s) de service(s) (par exemple un établissement bancaire) passent par des connexions sécurisées (par exemple selon le protocole https). La présente invention permet l'utilisation des protocoles de sécurité, par exemple de type SSL/TLS pour sécuriser la session de communication, mais permet en plus de créer un canal (CS) sécurisé au sein de cette session, pour protéger encore plus les informations sensibles échangées, par exemple pour permettre de résister notamment aux attaques de type « man in the middle » ou « man in the browser ». Dans d'autres modes de réalisation, la communication avec l'équipement (4) fournisseur pourra se faire selon d'autres types de protocoles, notamment des protocoles non sécurisés, puisque l'établissement du canal (CS) sécurisé est réalisé dès le début de la communication pour qu'aucune donné sensible ne transite « en clair » sur le réseau. Par exemple, dès que le lecteur (1) est activé (par exemple lorsqu'il est connecté à un terminal communicant ou lorsqu'il accède à la carte), il se met en relation (grâce à ses moyens de communication ou ceux du terminal) avec l'équipement (4) fournisseur via le réseau (RC) de communication (par exemple grâce une URL stockée dans des moyens de mémorisation et extraite par le lecteur) pour établir le canal sécurisé.

On comprend donc que les systèmes d'initialisation et de transaction sécurisée en ligne, via au moins un réseau (RC) de communication, comportent au moins un lecteur (1) de carte (2) sécurisée, qui communique (par exemple via un terminal (3) comportant des moyens (30) de traitement de données exécutant au moins un navigateur (N) agencé pour communiquer via ledit réseau (RC), ou directement grâce à des moyens de communication) avec au moins un équipement (4) d'un fournisseur de service comprenant au moins un serveur (40) agencé pour gérer des transactions avec des lecteurs (1) ou des navigateurs (N) de terminaux (3) d'utilisateurs, par l'échange de données représentatives de transactions, et au moins un module de sécurité (41), agencé pour sécuriser ces transactions (en coopération avec le lecteur).

Plus particulièrement les systèmes selon l'invention sont agencés pour l'établissement d'un canal (CS) sécurisé entre le lecteur (1) de carte (2) sécurisée et le module de sécurité (41), grâce à au moins une clé de cryptage (CF) et à des données (D_chip) représentatives d'au moins une information liée à la carte, stockées dans la puce de la carte sécurisée. Cette clé de cryptage correspond à un « secret partagé » par la carte et l'équipement (4) fournisseur et elle sert à générer de part et d'autre une clé de session (Kses) permettant le cryptage des données des transactions transmises via le canal sécurisé. Ainsi, le module de sécurité (41) (ou serveur) et le lecteur (1) utilisent la même clé de session pour crypter/décrypter les données qu'ils s'échangent pour la transaction. On comprend donc que par ces cryptages/décryptages effectués de part et d'autre, un canal sécurisé (CS) est établi entre les deux entités pour permettre que les données sensibles ne puissent pas être violées. Ces données (D_chip) représentatives d'informations liées à la carte correspondent à des données « publiques » car elles ne sont pas sensibles et peuvent donc transiter sans cryptage sur le réseau. Ces données (D_chip) publiques sont envoyées à l'équipement (4) fournisseur pour lui permettre d'identifier la carte (2) et réaliser les mêmes opérations cryptographiques que la carte (2) et le lecteur (1). On entend ici par le terme « établissement d'un canal sécurisé » le fait que l'équipement (4) fournisseur (en particulier le module (41) de sécurité) et le lecteur (1) se mettent en relation pour calculer une même clé de session (Kses) qu'ils utilisent pour crypter/décrypter les données des transactions échangées par la suite, transitant par le canal (CS) sécurisé. La présente invention concerne donc un procédé et un système d'initialisation de transactions sécurisés reposant sur l'établissement d'un canal sécurisé (CS) pour les transactions. Une fois ce canal (CS) établi, la transaction est initialisée et peut se dérouler au travers du canal sécurisé. La présente invention concerne donc également un procédé et un système de transactions sécurisés reposant sur une telle initialisation par l'établissement d'un canal sécurisé (CS). La présente invention propose donc des systèmes résistant aux divers types d'attaques connues en utilisant, de façon avantageuse, les mécanismes de sécurité déjà déployés dans les cartes sécurisées, mais en les exploitant à distance en relation avec l'équipement du fournisseur de service par l'intermédiaire d'au moins un canal (CS) sécurisé permettant de garantir la sécurité des transactions, voire même leur confidentialité totale dans certains modes de réalisation détaillés plus loin. En effet, au lieu de proposer une simple signature des transactions par la carte (2) (grâce au lecteur), réalisée en fin de transaction pour valider cette dernière, comme dans l'art antérieur (notamment dans les systèmes de type CAP), on propose d'initialiser la transaction en établissant un canal sécurisé (CS) reposant sur les mêmes mécanismes cryptographiques, mais dont l'utilisation est modifiée pour la mise en oeuvre de la présente invention. L'utilisation de ces mécanismes cryptographiques est modifiée en particulier car le(s) cryptogramme(s) généré(s) par la carte (2) sont utilisés par le lecteur (1) pour générer une clé de session (Kses), par exemple en concaténant 2 cryptogrammes fournis par la carte (2). D'autre part, le module de sécurité est ici agencé pour lui aussi générer la même clé de session (Kses) qui sera ensuite utilisée par ce dernier et par le lecteur pour crypter/décrypter les données qu'ils doivent s'échanger pour la transaction proprement dite. En revanche, dans l'art antérieur, notamment dans les systèmes CAP, la carte envoie simplement un cryptogramme en fin de transaction vers le module de sécurité (41) qui vérifie simplement si le cryptogramme est correct. De plus, l'utilisation de ces mécanismes est modifié lors des transactions car les opérations de cryptage/décryptage sont effectuées de part et d'autre pour les envois de données via le canal sécurisé (CS), à la fois du serveur vers le lecteur et du lecteur vers le serveur. Dans l'art antérieur, notamment dans les systèmes CAP, le serveur ne crypte pas de données à envoyer à la carte ou au lecteur. On comprend donc que le cryptage par le module de sécurité des données envoyées au lecteur qui les décrypte est une utilisation avantageuse et nouvelle de mécanismes dont seulement une partie est connue. De plus, l'établissement du canal sécurisé repose sur l'échange d'informations entre la carte (grâce au lecteur) et le serveur. Lorsque toutes les données relatives à la transaction sont uniquement saisies, traitées et/ou affichées sur le lecteur (et pas du tout sur le terminal auquel le lecteur peut être connecté), l'invention permet une confidentialité totale des données, en plus de la sécurité fournie par le canal sécurisé (CS), comme détaillé plus loin.

Le système d'initialisation selon l'invention comporte au moins un lecteur (1) de carte à puce accédant à l'équipement (4) fournisseur via ledit réseau (RC) de communication et comprenant des moyens (12) de traitement agencés pour, d'une part, échanger des données avec au moins une puce (20) d'au moins une carte (2) sécurisée, afin d'obtenir de la puce (20) et transmettre au module de sécurité (41) des données (D_chip), dites publiques, représentatives d'au moins une information liée à la carte (2) et, d'autre part, pour générer, en coopération avec ladite puce (20), au moins une clé de session (Kses), et transmettre au module de sécurité (41) des données cryptées à l'aide cette clé de session (Kses). Le module de sécurité (41) est agencé pour calculer ladite clé de session (Kses), à partir desdites données publiques (D_chip) reçues et d'au moins une clé de cryptage (CF). Ce calcul de la clé de session (Kses) par le lecteur (1) et le module de sécurité (41) permettant l'initialisation de la transaction en établissant un canal (CS) de communication sécurisé dans lequel les données représentatives de la transaction pourront transiter sous forme cryptée par ladite clé de session (Kses).

Pour calculer la clé de session (Kses) à partir des données reçues, le module de sécurité (41) pourra effectuer les mêmes calculs que le lecteur (1) et la carte (2). Par exemple, le lecteur pourra générer la clé de session à partir d'au moins un cryptogramme (ARQC, AAC) généré par la puce (20) de la carte (2), comme détaillé dans la présente demande, et le module de sécurité (41) pourra lui aussi générer au moins un cryptogramme (ARQC, AAC), puis calculer la clé de session (Kses) à partir ce(s) dernier(s).

Le système selon certains modes de réalisation va maintenant être décrit en référence à la figure 1. On notera que les divers modes de réalisations décrits dans la présente demande peuvent être combinés entre eux à moins que l'inverse ne soit explicitement mentionné, ou qu'ils ne soient incompatibles entre eux et/ou que leur combinaison ne fonctionne pas, que ce soit pour le système ou le procédé.

Le système de transaction selon la présente invention comporte donc au moins un lecteur (1) de carte à puce connecté au terminal (3) utilisateur et comprenant des moyens (12) de traitement agencés notamment pour échanger des données avec une carte (2) sécurisée d'un utilisateur à laquelle accède le lecteur (grâce au fait que la carte est insérée dans le lecteur ou grâce à une lecture à distance dans le cas de cartes et de lecteurs dits « sans contacts »). Le lecteur (1) peut également comporter des moyens (10) d'affichage et des moyens (11) de saisie (tels qu'un écran et une pluralité de touches, ou même un écran tactile), pour permettre à l'utilisateur de vérifier des informations affichées et saisir ou valider des données, selon divers modes de réalisation. Les moyens (12) de traitement du lecteur (1) sont également agencés pour réaliser un traitement local de données, comme par exemple des opérations de chiffrement (cryptage) ou déchiffrement (décryptage) des données représentatives d'une transaction, par exemple en fonction de messages échangés avec la carte ou avec l'équipement (4) fournisseur. On notera que la carte (2) à puce (20) est dite « d'un utilisateur » et qu'il est connu dans le domaine qu'elles appartiennent exclusivement à un utilisateur. Néanmoins, il est connu également des cartes sécurisées, par exemple de type EMV, ayant plusieurs titulaires et cette désignation ne doit donc pas être interprétée de façon limitative mais comme suggérant qu'elle permet l'identification (parfaitement fiable dans certains cas) de l'utilisateur qui en fait l'usage comme un utilisateur autorisé (par la vérification du code PIN en particulier). Les cartes (2) sécurisées sont connues de l'art antérieur et comportent au moins une puce (20) permettant de signer des transactions, notamment une fois l'authentification de leur utilisateur réalisée, par validation d'un code d'identification personnel valide (code PIN, pour « Personal Identification Number, selon la terminologie anglo-saxonne). Aucun détail ne sera donc donné sur le fonctionnement de ces cartes au-delà des étapes les plus spécifiques à la mise en oeuvre de la présente invention.

Les moyens (12) de traitement du lecteur (1) de carte sécurisée, sont en outre agencés pour générer, en coopération avec la puce (20) de la carte (2), au moins une clé de session (Kses). Pour générer une clé de session (Kses), le lecteur (1) obtient de la carte (2) un certain nombre de données qui sont détaillées ci-après selon divers modes de réalisation. En particulier, la clé de session (Kses) est générée par le lecteur (1) en coopération avec la puce (20) qui stocke au moins une clé de cryptage (CF) et des données (D_chip) publiques. Les moyens de traitement (12) du lecteur (1) pourront par exemple exécuter au moins une application spécifique pour la mise en oeuvre de l'invention (notamment pour l'établissement du canal sécurisé grâce aux cryptages/décryptages des données). Dans certains modes de réalisation, les moyens (12) de traitement du lecteur (1) sont agencés pour recevoir du module de sécurité (41) et traiter au moins une commande d'établissement (initialisation) du canal (CS) sécurisé, induisant l'interrogation de la puce (20) par le lecteur (1) pour obtenir au moins un cryptogramme (AAC, ARQC) et les données (D_chip) représentatives d'informations liées à la carte (2), ce qui permet aux moyens (12) de traitement du lecteur (1) de générer la clé de session (Kses) servant à établir le canal (CS) de communication sécurisé et de transmettre au module de sécurité (41), d'une part, les données (D_chip) représentatives d'informations liées à la carte (2) et, d'autre part, lesdites données cryptées à l'aide cette clé de session (Kses). Dans certains modes de réalisation, cette commande d'établissement du canal pourra comporter un nombre imprédictible (UN) augmentant la sécurité comme détaillé plus loin. Dans ce cas, les données cryptées par le lecteur (1) à l'aide de la clé de session (Kses) comporteront des données relatives à ce nombre imprédictible (UN). Par exemple, le lecteur génère un numéro de session (Nses) qui peut par exemple correspondre à une concaténation de ce nombre imprédictible (UN) avec un compteur de transaction (connu sous le nom de ATC dans le domaine bancaire) et pourra chiffrer ce numéro de session (Nses) par la clé de session (Kses) pour l'envoyer au module de sécurité (41). Lors de l'établissement du canal (CS) sécurisé, le lecteur (1) pourra demander la saisie du code PIN par l'utilisateur, de façon à authentifier ce dernier pour conditionner la génération de cryptogramme(s). En réponse à la commande d'établissement du canal, le lecteur envoie à l'équipement (4) fournisseur au moins des données (D_chip) représentatives d'informations liées à la carte (2). Ces données peuvent être envoyées sans cryptage préalable par le lecteur (1), comme mentionné précédemment. Le module de sécurité (41) est agencé pour calculer la clé de session (Kses), à partir d'au moins une clé de cryptage (CF) et des données (D_chip) publiques qui lui sont transmises par le lecteur (1), qui les a obtenues auprès de la puce (20) de la carte (2). Ces échanges de données permettent donc l'initialisation de la transaction puisque cette clé de session (Kses) permet l'établissement du canal sécurisé (CS) entre le module de sécurité (41) et le lecteur (1) grâce aux cryptages/décryptages des données échangées entre ces derniers. Les données échangées pour permettre la transaction (par exemple pour définir divers paramètres de la transaction, pour valider la transaction, etc.) sont alors cryptées dès le départ (par le lecteur et le module de sécurité), contrairement à certaines solutions de l'art antérieur (notamment CAP) où seule la validation de la transaction repose sur une signature par la carte (2) elle-même (et non pas un cryptage de part et d'autre par le module de sécurité et le lecteur).

Dans certains modes de réalisation, la puce (20) de la carte (2) est en fait agencée pour générer, à partir de la clé de cryptage (CF), au moins un cryptogramme (AAC, ARQC) utilisé par les moyens (12) de traitement du lecteur (1) pour générer la clé de session (Kses) servant à l'établissement du canal (CS) sécurisé. Le(s) cryptogramme(s) généré(s) par la carte pourra (ou pourront) être, par exemple, du type des cryptogrammes connus sous le nom de AAC (pour «Application Authentication Cryptogram » selon la terminologie anglo-saxonne) et/ou sous le nom de ARQC (pour « Authorization ReQuest Cryptogram » selon la terminologie anglo-saxonne) classiquement connus dans le domaine. Dans certaines variantes de réalisation la puce pourra générer les deux types de cryptogrammes et ce sera leur conjonction qui permettra au lecteur (1) de générer la clé de session (Kses) (par exemple par une concaténation des deux cryptogrammes).

Dans certains modes de réalisation, le module de sécurité (41) utilise au moins une clé, dite clé mère (CM) ayant servi à la génération des clés (CF) des cartes (2) sécurisées fournies par le fournisseur de service, dites clés filles (CF), chacune des cartes (2) fournies étant identifiable à partir d'au moins une information contenue dans les données (D_chip) publiques,

Dans ces modes de réalisation, les moyens (12) de traitement du lecteur (1) transmettent au module de sécurité (41) les données (D_chip) publiques pour lui permettre de trouver la clé de cryptage (CF) à utiliser pour calculer la clé de session (Kses) et permettre ainsi le cryptage/décryptage des données représentatives de la transaction, transmises via le canal (CS) sécurisé. Selon un exemple particulier, le module de sécurité (41) utilise un algorithme, par exemple de type 3DES, pour générer les clés de cryptage (CF) à partir de la clé mère (CM) et des données (D_chip) publiques. Un tel algorithme permet donc au module de sécurité (41), grâce aux données (D_chip) publiques qu'il reçoit du lecteur, de trouver la clé fille à utiliser à partir de la clé mère (CM). Pour plus de sécurité, on notera que la clé mère (CM) utilisée par le module de sécurité (41), peut être stockée sous forme cryptée par au moins une clé de cryptage, dite clé de secret (SK). On notera également que la clé de cryptage (CF) n'est en fait présente que furtivement dans le module de sécurité (41), lors du calcul de la clé de session (Kses).

Dans certains modes de réalisation correspondant à une alternative aux modes de réalisation du paragraphe précédent, l'équipement (4) du fournisseur de service comporte au moins une base de données stockant les clés de cryptage (CF) des cartes (2) sécurisées fournies par le fournisseur de service, le module de sécurité (41) accédant à cette base de données pour trouver, en fonction des données (D_chip) publiques reçues du lecteur (1) de carte à puce, la clé (CF) à utiliser pour calculer la clé de session (Kses). Pour plus de sécurité, on notera ici que les clés de cryptage (CF) conservées dans le module de sécurité (41) pourront être stockées sous forme cryptées, par au moins une clé de cryptage, dit clé de secret (SK)..

Dans certains modes de réalisation, les données (D_chip) représentatives d'informations liées à la carte (2) pourront être représentatives d'au moins une information permettant au moins d'identifier la carte utilisée pour la transaction. Selon divers modes de réalisation, ces données peuvent également représenter au moins une information relative à des positions (ou valeurs) de compteurs. Ces données pourront être par exemple telles que celles actuellement connues dans le domaine des cartes bancaires, comportant un numéro de compte primaire (PAN, pour « Primary Account Number ») qui pourra être utilisé par le module de sécurité (41) pour retrouver la clé fille (à partir de la clé mère ou parmi les clés filles stockées, selon les 2 exemples décrits dans les 2 paragraphes précédents). D'autres données utilisables par le module de sécurité (41) dans la présente invention, pour retrouver le(s) cryptogramme(s), sont des données connues sous l'identifiant IAD (pour « Issuer Authentication Data » selon la terminologie anglo-saxonne) et qui peuvent comporter des données représentatives d'informations connues sous les acronymes de KDI (« Key Derivation Index » selon la terminologie anglo-saxonne), CVN (pour « Cryptogram Version Number » selon la terminologie anglo-saxonne) et CVR (pour « Card Verification Result selon la terminologie anglo-saxonne). De plus ces données pourront également comporter les données connues sous les noms anglo-saxons de « Card Risk Management Data Object List 1 » (CDOL1), « Card Risk Management Data Object List 2 » (CDOL1), « Application Transaction Counter » (ATC) et « Primary Account Number Sequence » (PSN). On notera que les exemples de données représentatives d'informations liées à la carte qui sont donnés ici ne sont pas limitatifs et ne représentent que des exemples choisis, en particulier dans le domaine bancaire, pour détailler la façon dont le module de sécurité (41) peut calculer la clé de session permettant le cryptage des données transitant par le canal (CS) sécurisé.

Tout ou partie de ces données (D_chip) de la carte (2) permet au module de sécurité (41) de calculer la clé de session (Kses). Ainsi, selon divers modes de réalisation, les données publiques (D_chip) représentent au moins une information liée à la carte et permettent au moins d'identifier la carte (2). Par exemple, le module de sécurité (41) peut être agencé pour :
- retrouver la clé de cryptage (CF) à utiliser grâce à au moins une partie de ces données (D_chip), par exemple le PAN de la carte (2) qui lui est transmis par le lecteur (1),
- générer au moins un cryptogramme (AAC, ARQC) à partir d'au moins une partie des ces données (D_chip) et de la clé de cryptage (CF), par exemple en exécutant au moins une application telle que celle utilisée par la carte pour générer le(s) cryptogramme(s),
- calculer la clé de session (Kses) de la même manière que le lecteur (1) à partir du (ou des) cryptogramme(s) (AAC, ARQC), par exemple, grâce à une application au moins partiellement équivalente à celle du lecteur.

Dans certains modes de réalisation, l'établissement du canal (CS) sécurisé est initié par l'équipement (4) fournisseur (lorsque le lecteur (1) se trouve mis en relation avec ce dernier ou lorsqu'une demande de transaction est reçue par ce dernier). Par exemple, lorsque les cartes (2) comportent plusieurs applications pour générer des cryptogrammes (ce qui permet d'augmenter le niveau de sécurité), l'équipement (4) fournisseur (soit le serveur (40) d'opérations, soit le module (41) de sécurité) pourra envoyer une commande d'initialisation du canal (CS) sécurisé au lecteur (1), en spécifiant au moins une application à utiliser pour générer les cryptogrammes, grâce à au moins un identifiant d'application (AID, pour « Application IDentifier » selon la terminologie anglo-saxonne). Il est connu que les puces (20) des cartes (2) sécurisées stockent parfois au moins une liste donnant un ordre de priorité à leurs applications. L'identifiant d'application permet que la puce n'utilise pas les applications selon cet ordre mais en fonction de ce qui lui est indiqué par l'équipement (4) fournisseur. En variante, l'équipement (4) fournisseur pourra stocker les mêmes listes et l'identifiant d'application transmis pourra donc simplement indiquer le numéro de l'application dans la liste. Dans d'autres variantes plus simples, les listes de l'équipement (4) fournisseur permettent de se passer d'un tel identifiant d'application. Dans d'autres modes de réalisation, le canal (CS) sécurisé pourrait être initié par le lecteur (1) qui transmettra à l'équipement (4) fournisseur un tel identifiant d'application qui lui est fourni par la carte (2) lorsqu'elle génère au moins un cryptogramme ou qu'il aura utilisé pour indiquer à la carte quelle application utiliser pour générer le(s) cryptogramme(s). On notera que les mêmes mécanismes pour identifier l'application pourront être utilisés pour informer le lecteur sur l'application qu'il doit utiliser pour générer la clé de session (dans le cas où il comporterait plusieurs applications pour cette fonction) ou pour informer l'équipement (4) fournisseur sur l'application qu'il a utilisée.

Certains modes de réalisation comportent un mécanisme permettant d'augmenter encore la sécurité du cryptage. Ce mécanisme repose sur un nombre imprédictible (UN) mentionné précédemment, qui est généré par l'équipement (4) fournisseur (par le serveur (40) d'opérations ou par le module (41) de sécurité), lors de l'établissement du canal (CS) sécurisé. Ce nombre imprédictible (UN) est transmis au lecteur (1) pour former un aléa à partir duquel la clé de session (Kses) sera générée. En variante, le nombre imprédictible (UN) pourra être généré par la carte (2) ou le lecteur (1), ou même être saisi par l'utilisateur sur le lecteur (1) et transmis à l'équipement (4) fournisseur, mais la sécurité est améliorée lorsque c'est le serveur qui l'envoie au lecteur. Dans certains modes de réalisation combinant les modes ou variantes ci-dessus, de manière à augmenter encore le niveau de sécurité, le nombre imprédictible (UN) et l'identifiant d'application seront transmis tous les deux lors de l'établissement (initialisation) du canal (CS) sécurisé (que ce soit à l'initiative du lecteur ou du fournisseur).

On comprend donc que, dans certains modes de réalisation particulièrement sécurisés, le lecteur (1) peut demander à la puce (20) de la carte de générer un premier cryptogramme (par exemple ARQC) en spécifiant un nombre imprédictible (UN). La puce (20) renverra alors un premier cryptogramme, par exemple avec un compteur de transaction (ATC par exemple) et avec des données de type IAD (par exemple DKI, CVN et CVR). Le lecteur pourra alors demander à la puce (20) de la carte de générer un second cryptogramme (par exemple AAC) en spécifiant par exemple le nombre imprédictible (UN) à nouveau. La puce (20) renverra alors un second cryptogramme, par exemple avec un compteur de transaction (ATC par exemple) et avec des données de type IAD (par exemple DKI, CVN et CVR). Le lecteur (1) pourra alors générer la clé de session (Kses) en concaténant les premier et second cryptogrammes.

D'autre part, dans certains modes de réalisation, le lecteur (1) est agencé pour générer un numéro de session (Nses). Ce numéro de session (Nses) est lié au nombre imprédictible (UN) et au compteur de transaction (par exemple ATC) associé à un identifiant de l'utilisateur de la carte (2). Ainsi, le lecteur (1) génère le numéro de session (Nses) par la conjonction du nombre imprédictible (UN) et du compteur de transaction (par exemple grâce à une concaténation).

Dans ces modes de réalisation, une fois la clé de session calculée, le lecteur peut transmettre le numéro de session (Nses) à l'équipement (4) fournisseur, sous forme cryptée par la clé de session (Kses). Ce numéro de session (Nses) permet ensuite à l'équipement (4) fournisseur d'identifier le lecteur (1) avec lequel des transactions sont en cours. Le serveur (40) d'opérations pourra utiliser ce numéro de session (Nses) pour tracer les opérations réalisées. Par exemple, le serveur (40) d'opérations pourra demander des cryptages/décryptages au module de sécurité en lui indiquant le numéro de session. De plus, l'équipement (4) fournisseur peut être agencé pour générer un numéro de séquence (Nseq) associé à chaque transaction et incrémenté à chaque commande envoyée au lecteur (1). Ainsi, une trace est conservée de chaque ordre (Nseq) pour chaque opération (Nses). Les données transitant via le canal sécurisé pourront donc toujours être accompagnées d'un numéro de session (Nses), d'un numéro de séquence (Nseq) et être cryptées par la clé de session (Kses).

Une fois le canal (CS) sécurisé établi, le lecteur (1) peut dialoguer avec l'équipement (4) fournisseur de façon sécurisée et accéder à la carte (2) pour obtenir divers types de données. Dans certains modes de réalisation, les moyens (12) de traitement du lecteur (1) sont agencés pour recevoir au moins un message crypté requérant l'interrogation de la puce (20), en provenance de l'équipement fournisseur (4), et décrypter ce message à l'aide de la clé de session (Kses), de façon à envoyer à la carte (2) au moins une commande APDU d'interrogation de la puce (20).

D'une manière générale, le lecteur est agencé pour répondre à des ordres ou commandes (par exemple via ces messages cryptés) envoyés par l'équipement fournisseur (4) (par exemple le serveur (40) d'opérations). Ces commandes pourront concerner, à titre d'exemples illustratifs et non limitatifs :
- une demande de confirmation de la connexion du lecteur (1) sur le terminal (3) et/ou une demande d'identification du lecteur (ne nécessitant pas d'échange avec la carte),
- un ordre d'initialisation du canal sécurisé,
- une demande d'affichage d'informations envoyées par l'équipement (4) fournisseur, pour confirmation (validation) par l'utilisateur,
- une demande d'affichage d'une invitation à la saisie de données par l'utilisateur,
- une demande de signature de données,
- les demandes d'interrogation de la puce (commande APDU), par exemple reçues sous forme de message crypté, décryptés par le lecteur qui interroge la puce.

Dans certains modes de réalisation, le serveur (40) d'opérations de l'équipement fournisseur (4) est agencé pour gérer l'établissement et l'utilisation du canal (CS) sécurisé en conservant (stockant) le nombre imprédictible (UN), le numéro de séquence (Nseq) associé à chaque transaction et incrémenté à chaque commande envoyée au lecteur (1), et le numéro de session (Nses).

Dans certains modes de réalisation, le module de sécurité (41) de l'équipement fournisseur (4) est agencée pour stocker la clé de session (Kses) dans des moyens de mémorisation et/ou pour crypter la clé de session (Kses) à l'aide d'une clé, dite clé maître (KM), et la transmettre au serveur (40) pour stockage sous forme cryptée ([Kses]_{KM}) dans des moyens de mémorisation. Ainsi, par exemple, le serveur (40) d'opérations, en charge de la gestion des communications avec l'utilisateur (via le terminal et le lecteur) conserve la clé de session (mais sous forme cryptée par la clé du module de sécurité pour plus de sécurité, car ce serveur n'est pas forcément aussi sécurisé que l'est le module de sécurité) et la renvoie au module de sécurité à chaque demande de cryptage/décryptage. Les échanges avec l'utilisateur n'ont alors pas à être suivies par le module de sécurité qui réalise simplement les opérations de cryptage/décryptage en réponse à des requêtes du serveur (40) d'opération gérant les autres opérations, notamment en identifiant la transaction en cours grâce au numéro de session (Nses) et l'ordre en cours grâce au numéro de séquence (Nseq).

L'équipement (4) fournisseur, notamment le serveur (40) d'opérations est donc agencé pour collecter ces données (D_chip) représentatives d'informations liées à la carte (2) et, dans certains modes de réalisation, pour conserver les éléments suivants associés à l'opération (au moins le temps de l'opération) :
- le cryptogramme ([Kses]_{KM}) de la clé de session (Kses), retourné par le module de sécurité (41),
- le n° de session (Nses), qui peut par exemple être constitué des 4 octets de l'UN et des 2 octets de l'ATC associé à l'identifiant du porteur,
- le n° de séquence (Nseq) au cours d'une session (opération), par exemple constitué de 2 octets et incrémenté à chaque commande ou ordre envoyé au lecteur (1).

De plus, le serveur (40) d'opérations peut être agencé pour vérifier la cohérence des informations en contrôlant qu'un numéro de session correct (comparaison avec le n° conservé) est présent lors du déchiffrement des données reçues du lecteur (1), et pour vérifier que le numéro de séquence (NSeq) est strictement croissant dans une session. Enfin, il peut également être agencé pour vérifier dans les données (D_chip) que l'authentification du porteur (PIN) a bien été effectuée.

Les données relatives à la transaction pourront également être stockées, notamment pour prévoir les cas de contestation, bien que la validation des transactions par l'utilisateur authentifié par son code puisse faire que les transactions ne soient pas répudiables.

Dans certains modes de réalisation où l'invention met en oeuvre un navigateur (logiciel de navigation exécuté sur les moyens de traitement du terminal (3) utilisateur ou du lecteur (1) directement), l'invention prévoit un module passerelle (ME) permettant de transmettre les données reçues de l'équipement (4) fournisseur vers le lecteur (1). En effet, les navigateurs (N) connus ne permettent pas, à l'heure actuelle, de transmettre des données reçues via un réseau de communication vers un lecteur de carte. Dans le cas d'un navigateur exécuté sur les moyens (30) de traitement d'un terminal (3) utilisateur, au moins un module (ME) passerelle exécuté sur ces moyens (30) de traitement sera nécessaire. Dans le cas d'un lecteur communicant mentionné précédemment, ce module pourra éventuellement être omis. Ce module passerelle est agencé pour contrôler les échanges de données transitant par le canal (CS) sécurisé entre le module de sécurité (41) et le lecteur (1), en transmettant au lecteur (1) les données reçues de l'équipement fournisseur (notamment le serveur (40) d'opérations) par le navigateur (N). Dans certains modes de réalisation, ce module passerelle (ME) pourra être exécuté au sein de l'environnement logiciel fourni par le navigateur. Par exemple, ce module passerelle pourra être un module d'extension (« plug-in » selon la terminologie anglo-saxonne) du navigateur (N). Il pourra être implémenté sous la forme d'une applet, par exemple de type JAVA™ L'invention pourra donc prévoir divers types d'implémentation tels que des plugins ou du code téléchargeable ou à l'avenir, les navigateurs pourront inclure une telle fonction. En variante, il est possible également que le lecteur et/ou la carte stocke(nt) des données permettant l'installation sur le terminal de ce module. Ainsi, le terminal (3) de l'utilisateur, lors de la connexion du lecteur ou/et lors de l'accès à la carte par le lecteur, pourra se trouver automatiquement muni du module passerelle permettant les transmissions de données dans le canal sécurisé.

Par exemple, un tel module (ME) passerelle peut permettre au navigateur de vérifier la présence du lecteur, en confirmant au navigateur cette présence ou, en cas d'absence ou de réponse inadéquate, en provoquant l'affichage d'un message invitant l'utilisateur à connecter le lecteur. D'une manière générale, le module passerelle pourra se charger de transmettre au lecteur les demandes reçues par le navigateur, telles que les demandes détaillées précédemment à titre d'exemples illustratifs et non limitatifs (interrogation de la puce, validation de données, signatures de données, invitation à la saisie, etc.) et pourra se charger de transmettre la (ou les) réponse(s) du lecteur (1) au navigateur.

Dans certains modes de réalisation, au moins une partie des données représentatives de la transaction, transmises au serveur (40) de l'équipement fournisseur (4), sont saisies par l'utilisateur sur des moyens de saisie du terminal (3), via des informations affichées par le navigateur (N) sur des moyens d'affichage du terminal (3). Ces modes de réalisation ne garantissent pas forcément la confidentialité car divers types d'attaques permettront de violer la confidentialité, voire même permettent de corrompre les données saisies. Cependant, mêmes si les données saisies sur le navigateur sont corrompues, la sécurité des transactions pourra quand même être garantie par la présente invention si l'utilisateur utilise le lecteur (1) pour saisir, vérifier les données relatives à la transaction et pour valider la transaction puisque les données de la transaction auront été cryptées pourtransiter par le canal (CS) sécurisé sans pouvoir être corrompues. L'invention pourra prévoir d'afficher via le navigateur un message informant l'utilisateur de la nécessité de vérifier et valider les informations sur le lecteur. Dans certains modes de réalisation permettant une confidentialité totale des informations et une sécurité parfaite les données sont toutes saisies par l'utilisateur sur le lecteur (1). Dans certains modes de réalisation, au moins une partie des données représentatives de la transaction, transmises au serveur (40) de l'équipement fournisseur (4), sont saisies par l'utilisateur sur les moyens (11) de saisie du lecteur (1) de carte à puce. On comprend donc que dans certaines variantes de l'invention, la sécurité et la confidentialité totales des transactions est assurée par le fait que toutes les données transitent dans le canal sécurisé entre le lecteur et l'équipement fournisseur.

Dans certains modes de réalisation, l'initialisation de la transaction fait suite à une transmission au serveur (40) de l'équipement fournisseur (4) d'au moins une partie des données représentatives de la transaction, par un serveur (5) tiers gérant un site Internet sur lequel l'utilisateur s'est connecté. Ainsi, l'initialisation a lieu lorsque l'utilisateur tente d'effectuer une transaction. La transaction elle-même peut alors passer par le canal sécurisé (CS). Dans certains modes de réalisation, au moins une partie des données représentatives de la transaction sont transmises au serveur (40) de l'équipement fournisseur (4) par un serveur (5) tiers gérant un site Internet sur lequel l'utilisateur s'est connecté. On comprend de la présente description que l'utilisateur peut s'être connecté au serveur tiers (5) à partir de son lecteur/terminal dans le cas où le lecteur est intégré dans un terminal communicant ou s'être connecté au serveur tiers (5) à partir de son terminal dans le cas où le lecteur est connecté à un tel terminal. La connexion de l'utilisateur se fait via le navigateur (N) du terminal (3), pour réaliser une transaction, sélectionnée grâce à des moyens de saisie du terminal (3). Ainsi, l'invention permet également l'achat d'articles en ligne. L'équipement fournisseur (4) recevant des données relatives à une transaction du serveur tiers (5) auquel est connecté le navigateur (N) peut se mettre en relation avec le lecteur pour établir le canal sécurisé et aucune donnée sensible ne se trouve alors plus accessible sur le réseau.

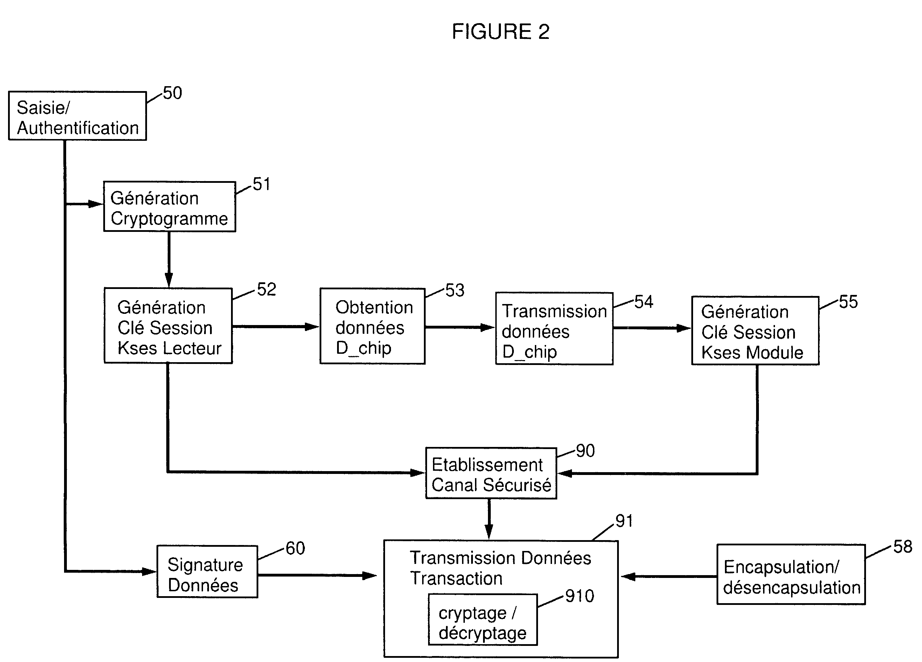

L'invention concerne également un procédé d'initialisation de transaction sécurisée en ligne et un procédé de transaction sécurisée en ligne dont un mode de réalisation est représenté sur la figure 2. Ces procédés sont mis en oeuvre par les systèmes selon l'invention. Le procédé de transaction comporte au moins une étape de transmission (91) de données chiffrées, par ladite clé de session (Kses) entre le module de sécurité (41) et le lecteur (1), suite à une étape d'établissement (90) d'au moins un canal (CS) de communication sécurisé entre le module de sécurité (41) et le lecteur (1). Cette étape d'établissement (90) du canal (CS) sécurisé est mise en oeuvre grâce aux étapes préalables suivantes :
- génération (52) d'au moins une clé de session (Kses), par les moyens (12) de traitement du lecteur (1), en coopération avec la carte (2), puis cryptage de données à l'aide de cette clé de session (Kses),
- obtention (53), par le lecteur (1), à partir de la puce (20) de la carte (2), de données (D_chip) représentatives d'informations liées à la carte (2),
- transmission (54), du lecteur (1) au module de sécurité (41), des données (D_chip) représentatives d'informations liées à la carte (2) et des données cryptées à l'aide de la clé de session (Kses),
- génération (55), par le module de sécurité (41), de la clé de session (Kses) à partir d'au moins une clé de cryptage (CF) du module de sécurité (41) et des données (D_chip) reçues.

Suite à cette étape d'établissement (90) du canal (CS) de communication sécurisé, la transaction peut se dérouler selon une séquence déterminée (en fonction du type de transaction), de façon complètement sécurisée, grâce à au moins une étape de transmission (91) de données chiffrées entre le module de sécurité (41) et le lecteur (1). On comprend donc que la présente invention présente l'avantage de sécuriser les données transmises dès le début de la transaction au lieu de ne sécuriser que la validation de la transaction par une signature (cryptographique) comme dans l'art antérieur. Dans certains modes de réalisation, l'étape de génération (52) d'au moins une clé de session (Kses), par les moyens (12) de traitement du lecteur (1) est précédée par une étape de génération (51), par la puce (20) de la carte (2), d'au moins un cryptogramme (AAC, ARQC) à partir de la clé de cryptage (CF) stockée dans la puce (20) et de transmission de ce(s) cryptogramme(s) au lecteur (1) générant la clé de session (Kses) à partir de ce(s) cryptogramme(s) (AAC, ARQC).

Dans certains modes de réalisation, le procédé comporte au moins une étape de saisie (50), par l'utilisateur de la carte (2), d'au moins un code d'identification personnelle (PIN) de l'utilisateur, et d'authentification de ce code par la puce (20) de la carte. Cette étape de saisie/authentification (50) peut être mise en oeuvre à l'établissement du canal sécurisé, pour que l'utilisateur soit authentifié depuis le début et que les échanges de données nécessaires à la transaction s'effectuent au travers du canal qui aura été établi en authentifiant l'utilisateur de la carte. Cette étape permet donc au moins une étape de signature (60) des données par la puce (20). Par exemple, lorsque le lecteur requiert des cryptogrammes de la puce pour calculer la clé de session, la puce effectue des signatures en faisant au moins un cryptogramme et le lecteur génère la clé de session, comme mentionné précédemment. Dans le cas d'une authentification lors de l'établissement du canal sécurisé (CS), cette signature (60) pour l'initialisation de la transaction se distingue des signatures classiquement utilisées dans le domaine, notamment dans le CAP, car ces signatures classiques qui sont réalisées en fin de transaction pour valider cette dernière (grâce à l'envoi d'un cryptogramme) alors que la signature d'initialisation de ces modes de réalisation est réalisée pour l'établissement du canal, avant tout échange de données, ce qui sécurise avantageusement la transaction. Néanmoins, la présente invention permet également la mise en oeuvre d'une autre étape de signature en fin de transaction. Par exemple, après que le canal ait été établi et une fois que la plupart des étapes nécessaires à la transaction se sont déroulées via le canal par l'échange de données sous forme cryptée, il est possible de requérir à nouveau la saisie du code PIN par l'utilisateur en fin de transaction, par exemple via l'affichage d'un résumé des informations de la transaction et d'une invitation à la saisie du PIN pour une signature du type classiquement utilisée dans le CAP. D'une manière générale, le procédé pourra également comporter au moins une étape de validation par l'utilisateur d'informations affichées et/ou saisies sur le lecteur et correspondant à des données représentatives de la transaction.

Dans certains modes de réalisation, le procédé comporte au moins une étape d'encapsulation/désencapsulation (58) des données représentatives de la transaction transitant via le canal (CS) sécurisé.

Dans certains modes de réalisation, l'étape de génération (52) d'au moins une clé de session (Kses), par les moyens (12) de traitement du lecteur (1) est précédée par une étape de génération (51), par la puce (20) de la carte (2), d'au moins un cryptogramme (AAC, ARQC) à partir de la clé de cryptage (CF) stockée dans la puce (20) et de transmission de ce(s) cryptogramme(s) au lecteur (1) générant la clé de session (Kses) à partir de ce(s) cryptogramme(s) (AAC, ARQC). Par exemple, le lecteur concatène deux cryptogrammes différents générés.

Dans certains modes de réalisation, le procédé comporte au moins une étape de réception et traitement, par les moyens (12) de traitement du lecteur (1), d'au moins une commande d'initialisation du canal (CS) sécurisé envoyée par lu module de sécurité (41), comprenant un nombre imprédictible (UN) et induisant l'interrogation de la puce (20) par le lecteur (1), pour obtenir au moins un cryptogramme (AAC, ARQC) et les données (D_chip) représentatives d'informations liées à la carte (2), cette étape permettant l'étape de génération (52) de la clé de session (Kses) servant à établir le canal (CS) de communication sécurisé et la transmission (54) au module de sécurité (41), d'une part, des données (D_chip) représentatives d'informations liées à la carte (2) et, d'autre part, lesdites données cryptées à l'aide cette clé de session (Kses), qui comportent des données relatives au nombre imprédictible (UN).

Le procédé de transaction sécurisée selon l'invention comporte les étapes du procédé d'initialisation et au moins une étape de transmission (91) de données entre le module de sécurité (41) et le lecteur (1), sous forme cryptée grâce à ladite clé de session (Kses), mise en oeuvre dans un système de transaction sécurisée selon l'invention.

Dans certains modes de réalisation, le serveur (40) est agencé pour requérir du module de sécurité (41), à chaque étape de transmission (91) de données avec le lecteur (1), un cryptage/décryptage par ladite clé de session (Kses) des données transmises, le lecteur (1) étant agencé pour crypter/décrypter également les données échangées au cours de la transaction.

On comprendra, à la lecture de la présente demande, que l'étape (90) d'initialisation du canal sécurisé, grâce à l'échange des données requises pourra comporter également des étapes de transmission de données représentatives du nombre imprédictible (UN), de l'identifiant d'application (AID), du numéro de session (Nses), du numéro de séquence (Nseq), etc. mentionnés précédemment. On comprend également que, une fois l'initialisation (90) du canal terminée, le procédé peut se dérouler avec au moins une itération de l'étape de transmission (91) de données cryptées à l'aide de la clé de session. Chaque itération de cette transmission (91) est associée à au moins une étape de cryptage/décryptage (910) des données transmises. Ainsi, on comprend que l'invention concerne tout d'abord un procédé et un système d'initialisation de transaction dans lesquels l'établissement (90), ou initialisation, du canal sécurisé (CS) se déroule par la mise en oeuvre des étapes précédemment décrites pour permettre aux deux entités d'utiliser la même clé de session et que l'invention porte également sur un procédé et un système de transaction sécurisé dans lesquels les transmissions (91) de données représentatives de la transaction sont associées à au moins une étape de cryptage/décryptage (910) des données transmises par ladite clé de session (Kses). C'est par le fait que les données sont cryptées que l'on entend qu'elles transitent par un canal sécurisé.

D'une manière générale, on comprend que l'invention permet la mise en oeuvre d'étapes relatives à des transactions telles que, par exemple, des virements bancaires en ligne, des paiements en ligne (par exemple de type 3D-secure), des changements de code PIN en ligne (l'envoi du nouveau code saisi se faisant sous forme cryptée par la clé de session via le canal sécurisé). On notera que la présente invention permet bien entendu la transmission d'autre type de données que celles concernant un code PIN puisque le terme « transaction » est désigné ici comme recouvrant tout type de transmission de données. Dans le cas d'un changement de code PIN d'une carte sécurisée, le nouveau code PIN transmis sous forme chiffrée via le canal sécurisé est déchiffré par le module (41) de sécurité et peut être stocké par l'équipement (4) fournisseur. Dans le domaine bancaire, les changements de code PIN nécessitent l'utilisation d'une commande spécifique à la carte, connue sous le nom de « secure messaging ». L'invention pourra intégrer cette fonctionnalité grâce à l'envoi, par l'équipement (4) fournisseur ayant reçu le nouveau code PIN choisi par l'utilisateur (saisi sur le lecteur), d'une telle commande contenant le nouveau code PIN et permettant le changement du code PIN par la carte.

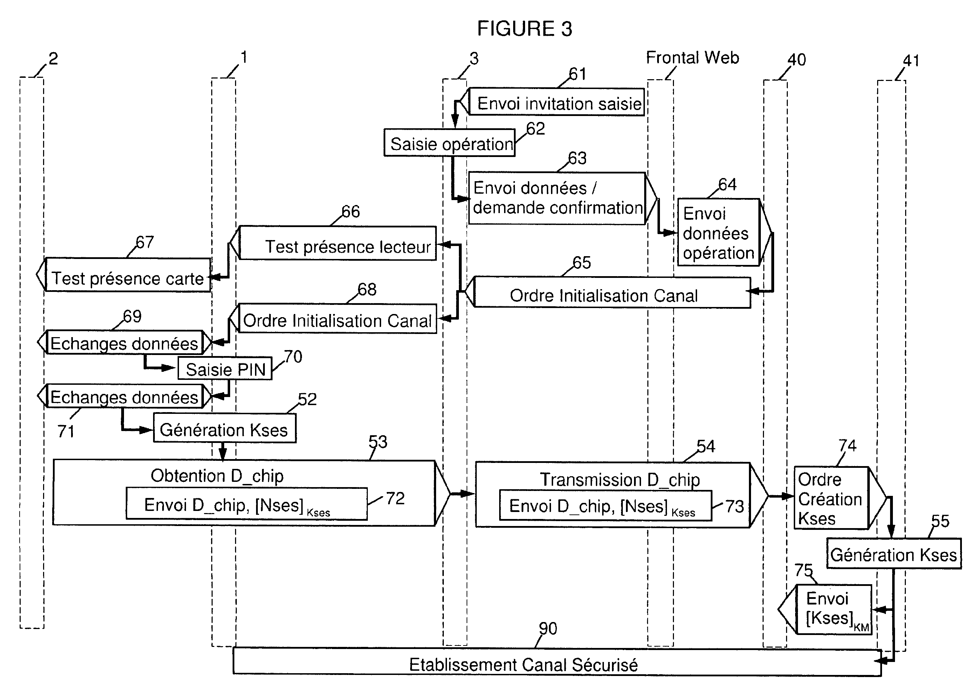

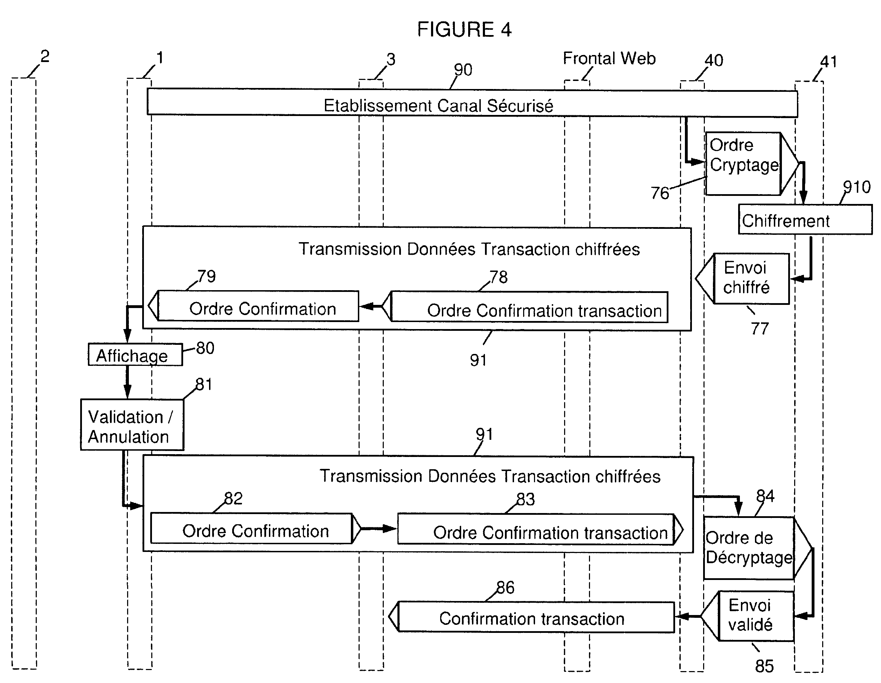

Les divers types de transactions possibles grâce à la mise en oeuvre du procédé pourront se dérouleront selon des séquences diverses, à la portée de l'homme de métier. Les figures 3 et 4 représente la séquence d'une opération de virement, dans l'exemple décrit précédemment d'un équipement (4) fournisseur comprenant un premier serveur, dit frontal, auquel accède le navigateur (N) du terminal (3) sur lequel est connecté un lecteur (1) accédant à la puce (20) de la carte (2) et un serveur (40) d'opérations gérant toutes les opérations et interrogeant le module de sécurité (41) pour les cryptages/décryptages. La figure 3 montre la séquence jusqu'à l'établissement (90) du canal sécurisé (CS), dans un exemple de réalisation adapté à une opération de virement. La figure 4 représente la suite du mode de réalisation du procédé de la figure 3, à partir de l'établissement (90) du canal sécurisé (CS). La figure 3 représente donc un mode de réalisation du procédé d'initialisation de transaction et la figure 4 représente donc un mode de réalisation du procédé de transaction. Dans cet exemple des figures 3 et 4, on considère qu'une session « e-banking » est déjà en cours : l'utilisateur a déjà été authentifié par une méthode mise en place par la banque et il souhaite réaliser une opération type virement bancaire durant sa session. Son lecteur est connecté, sa carte insérée. Dans cet exemple, le procédé pour mettre en oeuvre une telle opération de virement pourra se dérouler comme suit :
- Envoi (61) par l'équipement (4) fournisseur (le serveur frontal web, par exemple) d'une invitation à la saisie des champs de l'opération vers le terminal (3) ;
- Saisie (62) des données de l'opération par l'utilisateur sur le terminal (3) ;
- Envoi (63) des données de l'opération et demande de confirmation du terminal (3) vers le serveur Frontal Web ;

On notera que la saisie pourra en fait se faire sur le lecteur (1) au lieu du terminal. Dans ce cas, les étapes précédentes seront complémenter par des étapes de transmissions, grâce au module passerelle (ME), des données entre le terminal et le lecteur. On notera également que l'on a omis ici toutes les étapes réalisées par le module passerelle et que l'on ne mentionne que le terminal (3) pour plus de clarté et de simplicité. Le procédé se poursuit par :
- Envoi (64) des données de l'opération du frontal Web vers le serveur (40) d'opération ;
- Ordre (65) d'initialisation du canal sécurisé, par le serveur d'opération vers le terminal (3) ;
- Test (66) de la présence du lecteur par le terminal (3) ;
- Test (67) de la présence carte par le lecteur (1) ;
- Ordre (68) d'initialisation (90) du canal sécurisé par le terminal (3) vers lecteur (1) ;
- Echange(s) (69) entre le lecteur et la carte (par les commandes décrites précédemment, notamment ici pour une demande de saisie de code PIN) ;
- Saisie (70) du code PIN par l'utilisateur suite à une invitation sur l'affichage du lecteur (1) ;
- Echange(s) (71) entre le lecteur et la carte (par les commandes décrites précédemment, notamment ici pour la vérification du code PIN par la carte) ;
- Génération (52) de la clé de session (Kses) par le lecteur (1), pour établissement (90) du canal sécurisé (CS), par exemple avec Génération (51) de cryptogramme(s) par la carte (2), Génération d'un numéro de session N(ses), puis Cryptage (910) du numéro de session N(ses) ;
- Obtention (53) des données (D_chip) de la carte (2) par le lecteur (1) ;
- Transmission (54) des données (D_chip) représentatives d'informations liées à la carte (2), du lecteur (1) au module de sécurité (41), grâce ici notamment à :
   - Envoi (72) des données (D_chip) de la carte et du numéro de session (Nses) chiffrée par la clé de session (Kses), par le lecteur (1) vers le terminal (3) ;
   - Envoi (73) des données (D_chip) de la carte et éventuellement du numéro de session (Nses) chiffré par la clé de session (Kses), par le terminal (3) vers le serveur (40) d'opérations ;
- Ordre (74) de création de la clé de session (Kses) à partir des données (D_chip) de la carte, par le serveur d'opération vers le module de sécurité (41) ;
- Génération (55), par le module de sécurité (41), de la clé de session (Kses) à partir d'une clé de cryptage (CM) du module de sécurité (41) et des données (D_chip) reçues,
- Envoi (75) de la clé de session (Kses) chiffrée par la clé maitre (KM) par le module de sécurité (41) vers le serveur d'opération (pour stockage et réutilisation dans les étapes suivantes de la transaction, éventuellement avec le numéro de session et le numéro de séquence)

Le Canal (CS) sécurisé est alors activé (établissement (90) grâce aux générations (52 et 55) de part et d'autre. Le procédé d'initialisation est alors complet dans ce mode de réalisation et le procédé de transaction peut alors se poursuivre (figure 4) par :
- Ordre (76) de chiffrement (910) des données de l'opération pour l'affichage sur l'écran du lecteur, par le serveur d'opération vers le module de sécurité (41),
- Transmission (91) des données de la transaction cryptées à l'aide de la clé de session (Kses) grâce ici notamment à :
   - Envoi (77) de la chaine de caractères chiffrée par la clé de session par le module de sécurité (41) vers le serveur d'opération ;
   - Ordre (78) de demande de confirmation des informations chiffrées par la clé de session par le serveur d'opération vers le terminal (3) ;
   - Ordre (79) de demande de confirmation des informations chiffrées par la clé de session, par le terminal (3) vers le lecteur (1) ;
- Affichage (80) sur le lecteur (1) des informations chiffrées Et Validation/Annulation (81) par l'utilisateur en fonction des informations affichées.

On notera que le procédé pourra comporter plusieurs itérations successives des diverses étapes, notamment celles de transmissions (91) qui pourront comporter diverses commandes telles que celles décrites précédemment, notamment concernant l'ordre (79), l'affichage (80) et la validation/annulation (81): par exemple une itération pour demander la validation/annulation du compte à débiter, une itération pour demander la validation/annulation du compte à créditer, etc. Selon diverses variantes, ou pourra en fait avoir un seul ordre (79) envoyé pour plusieurs requérir plusieurs affichages (80) et validations (81) et étapes ou plusieurs ordres pour plusieurs étapes de validation/annulation). On notera également que l'encapsulation/désencapsulation (58) n'est pas mentionnée ici pour simplifier la description de la séquence d'étapes.

Le procédé de transaction se poursuit alors par une transmission (91) dans l'autre sens, notamment ici grâce à :
- Envoi (82) des informations validées, signées par la carte puis chiffrées par le lecteur (1) avec la clé de session, vers le terminal (3) ;
- Envoi (83) des informations validées, signées par la carte puis chiffrées par le lecteur (1) avec la clé de session, par le terminal (3) vers le serveur d'opération ;
- Ordre (84) de déchiffrement des informations validées, signées par la carte puis chiffrées avec la clé de session par le serveur d'opération vers le module de sécurité (41) ;

Pour permettre de conserver une trace des opérations, le procédé peut se poursuivre par une étape d'envoi (85) des informations validées et de la signature en clair pour archivage, du module de sécurité (41) vers le serveur (40) d'opération ; Le serveur (40) d'opération peut alors réaliser une Opération d'acquittement, avec par exemple l'envoi (86), au moins au terminal (3), d'une confirmation d'opération (confirmation de la transaction réalisée).

A la lecture de cet exemple illustratif ci-dessus et des moyens spécifiques décrits dans la présente demande, l'homme de métier comprendra les étapes, notamment parmi celles décrites ci-dessus, qui peuvent être mises en oeuvres pour diverses opérations, comme par exemple des transactions bancaires (paiement en ligne) ou des envois sécurisés de données (par exemple représentatives d'informations concernant la santé de l'utilisateur, etc.)

Le module de sécurité (41) est agencé au moins pour permettre une initialisation de transaction grâce au moins à une fonction d'initialisation du canal sécurisé, par exemple mise en oeuvre suite à un ordre de création du canal (CS) sécurisé provenant du serveur (40) d'opérations. Par exemple, cette fonction pourra avoir, comme paramètres d'entrée, les données représentatives d'informations liées à la carte (D_chip), pour la constitution de la clé de session et, comme valeurs retournées, la clé de session (Kses) chiffrée par la clé maître (KM) du module de sécurité (41) : [Kses]_{KM} On notera que, selon divers modes de réalisation, les valeurs retournées pourront également comporter le nombre imprédictible (UN) et/ou l'identifiant d'application (AID) mentionné précédemment ou que le serveur d'opérations pourra gérer cette fonction d'initialisation du canal sécurisé en la transmettant au lecteur après y avoir ajouté le nombre imprédictible (UN) et/ou l'identifiant d'application (AID).

Dans certains modes de réalisation, le module de sécurité (41) est agencé également pour permettre une transaction sécurisée grâce au moins à une fonction de chiffrement/déchiffrement (cryptage/décryptage) par exemple mise en oeuvre suite à :
- Un ordre de cryptage (chiffrement), par exemple envoyé au module de sécurité par le serveur (40) d'opérations. Par exemple, cette fonction pourra avoir, en paramètres [Kses]_{KM} la clé de session chiffrée par la clé maitre du module de sécurité, ainsi que les données à chiffrer et, en valeurs retournées, ces données chiffrées par la clé de session (Kses)
- Un ordre de décryptage (déchiffrement), par exemple envoyé au module de sécurité par le serveur (40) d'opérations. Par exemple, cette fonction pourra avoir, en paramètres, la clé de session chiffrée par la clé maitre du module de sécurité ([Kses]_{KM}) ainsi que les données à déchiffrer et en valeurs retournées les données en clair (déchiffrées).

De plus, en fonction des applications et de l'architecture (de l'équipement) du fournisseur de service, l'invention pourra également intégrer d'autres données et fonctions connues de l'homme de métier (clé de transport, transchiffrement...) et qui sont propres à chaque fournisseur de service.

La présente invention fait intervenir des « moyens de traitement de données » dans divers dispositifs (serveur, terminal, lecteur, carte, etc.). L'homme de métier comprendra à la lecture de la présente demande que de tels moyens de traitement de données concernent, pour la carte sécurisée, la puce qui comporte au moins un microprocesseur permettant le traitement de données. De plus, la puce permet de stocker divers types de données telles que celles représentatives d'informations liées à la carte, mais également de données permettant l'exécution d'application(s) spécifique(s) (pour la signature des transactions notamment). D'autre part, l'homme de métier comprendra que, pour les serveurs, les terminaux et le lecteur, de tels moyens pourront comporter également au moins un microprocesseur, par exemple monté sur une carte mère. D'une manière générale, les moyens de traitement de données peuvent comporter au moins un circuit électronique et/ou au moins un processeur. En fonction des ressources informatiques nécessaires, diverses variantes à la portée de l'homme de métier sont possibles. De même, les diverse tâches et fonctions décrites ici pourront en fait être réalisées par plusieurs dispositifs différents coopérant de façon à former l'entité décrite (serveur, terminal, etc.). En effet, il est possible par exemple que plusieurs serveurs coopèrent pour effectuer les tâches requises au sein du système auxquels ils appartiennent, comme expliqué par exemple pour les serveurs de l'équipement (4) fournisseur, et l'invention ne devra pas être limitée à la présence d'un seul serveur par exemple. De même, le terme serveur est particulièrement clair pour les applications décrites ici mais on comprendra que l'invention peut être mise en oeuvre également en remplaçant l'équipement fournisseur (serveurs) par au moins un terminal d'un utilisateur (qui comportera alors les moyens spécifiques décrits pour l'équipement fournisseur, en ayant au préalable configuré la carte et ce terminal pour permettre la mise en oeuvre de l'invention. De plus, l'invention met en oeuvre, dans divers modes de réalisation, des applications logicielles et la façon dont ces applications sont mises en oeuvre doit être entendu comme n'étant pas limité à leur exécution sur un seul dispositif puisque les moyens de traitement peuvent être distribués au sein de plusieurs dispositifs. Ainsi, les applications décrites ici pourront également provenir de sources disparates (notamment dans le cas de code téléchargeable) et c'est une interprétation fonctionnelle qu'il conviendra d'appliquer puisque c'est l'exécution des fonctions décrites ici qui importe.

En particulier, l'invention met en oeuvre des moyens spécifiques, notamment dans le terminal utilisateur (module passerelle pour le navigateur), dans l'équipement fournisseur (au moins le module de sécurité et un serveur pour les échanges), dans le lecteur (application spécifique). L'invention peut donc également concerner chacun de ces éléments séparant, avec ses moyens spécifiques décrits ici.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Lecteur (1) de carte à puce pour transactions sécurisées en ligne, via au moins un réseau (RC) de communication, par l'échange de données représentatives de transactions avec au moins un équipement (4) d'un fournisseur de services comprenant au moins un serveur (40) agencé pour gérer des transactions en ligne et au moins un module de sécurité (41) sécurisant ces transactions en coopération avec le lecteur (1), **caractérisé en ce qu'**il comprend des moyens (12) de traitement qui sont adaptés pour :
- échanger, préalablement à toute transaction, des données avec au moins une puce (20) d'au moins une carte (2) sécurisée, afin d'obtenir de la puce (20) et transmettre au module de sécurité (41) des données (D_chip), dites publiques, représentatives d'au moins une information liée à la carte (2),
- générer, préalablement à toute transaction, en coopération avec ladite puce (20), au moins une clé de session (Kses), et transmettent au module de sécurité (41) des données cryptées à l'aide de cette clé de session (Kses), afin que le module de sécurité (41) puisse calculer ladite clé de session (Kses), à partir desdites données publiques (D_chip) reçues et d'au moins une clé de cryptage (CF),
- échanger les données représentatives de la transaction avec le module de sécurité (41), sous forme cryptée par ladite clé de session (Kses), formant ainsi un canal (CS) de communication sécurisé pour la transaction.

2. Lecteur (1) de carte à puce selon le revendication 1, **caractérisé en ce que** les moyens (12) de traitement du lecteur (1) sont adaptés pour générer la clé de session (Kses) en coopération avec la puce (20) de la carte (2), en requérant de la puce (20) de la carte (2) qu'elle génère, à parti d'au moins une clé de cryptage (CF) stocké dans la puce (20), au moins un cryptogramme (AAC, ARQC) utilisé par le lecteur (1) pour générer la clé de session (Kses) servant à l'établissement du canal (CS) sécurisé.

3. Système de transaction sécurisée en ligne, via au moins un réseau (RC) de communication, le système comportant au moins un équipement (4) d'un fournisseur de services comprenant au moins un serveur (40) agencé pour gérer des transactions en ligne, par l'échange de données représentatives de transactions avec au moins un lecteur (1) de carte (2) à puce, ledit équipement (4) comprenant également au moins un module de sécurité (41), agencé pour sécuriser ces transactions, **caractérisé en ce que** :
- ledit système comporte au moins un lecteur (1) de carte à puce selon l'une des revendications 1 et 2,
- le module de sécurité (41) calcule ladite clé de session (Kses), à partir desdites données publiques (D_chip) reçues et d'au moins une clé de cryptage (CF),
- le lecteur (1) et le module de sécurité (41) cryptent et décryptent, par ladite clé de session (Kses), les données représentatives de la transaction qu'ils s'échangent au cours de la transaction, formant ainsi un canal (CS) de communication sécurisé pour la transaction.

4. Système selon la revendication 3, **caractérisé en ce que** :
- le module de sécurité (41) utilise au moins une clé, dite clé mère (CM) ayant servi à la génération des clés (CF) des cartes (2) sécurisées fournies par le fournisseur de service, dites clés filles (CF), chacune des cartes (2) fournies étant identifiable à partir d'au moins une information contenue dans les données (D_chip) publiques,
- les moyens (12) de traitement du lecteur (1) transmettent au module de sécurité (41) les données (D_chip) publiques pour lui permettre de trouver la clé de cryptage (CF) à utiliser pour calculer la clé de session (Kses).

5. Système selon une des revendications 3 et 4, **caractérisé en ce que** l'équipement (4) du fournisseur de service comporte au moins une base de données stockant les clés de cryptage (CF) des cartes (2) sécurisées fournies par le fournisseur de service, le module de sécurité (41) accédant à cette base de données pour trouver, en fonction des données (D_chip) publiques reçues du lecteur (1) de carte à puce, la clé de cryptage (CF) à utiliser pour calculer la clé de session (Kses).

6. Système selon une des revendications 3 à 5, **caractérisé en ce que** le lecteur (1) et l'équipement fournisseur (4) sont mis en relation au travers d'une communication sécurisée selon un protocole de type SSL/TLS au sein de laquelle est établi le canal (CS) sécurisé.

7. Svstème selon une des revendications 3 à 6. **caractérisé en ce que** les moyens (12) de traitement du lecteur (1) sont agencés pour recevoir du module de sécurité (41) et traiter au moins une commande d'initialisation du canal (CS) sécurisé comprenant un nombre imprédictible (UN) et induisant l'interrogation de la puce (20) par le lecteur (1), pour obtenir au moins un cryptogramme (AAC, ARQC) et les données (D_chip) représentatives d'informations liées à la carte (2), ce qui permet aux moyens (12) de traitement du lecteur (1) de générer la clé de session (Kses) servant à établir le canal (CS) de communication sécurisé et de transmettre au module de sécurité (41), d'une part, les données (D_chip) représentatives d'informations liées à la carte (2) et, d'autre part, lesdites données cryptées à l'aide cette clé de session (Kses), qui comportent des données relatives au nombre imprédictible (UN).

8. Système selon une des revendications 3 à 6. **caractérisé en ce que** l'initialisation de la transaction fait suite à une transmission au serveur (40) de l'équipement fournisseur (4) d'au moins une partie des données représentatives de la transaction, par un serveur (5) tiers gérant un site Internet sur lequel l'utilisateur s'est connecté.

9. Système selon une des revendications 3 à 8. **caractérisé en ce que** le serveur (40) de l'équipement fournisseur (4) est agencé pour gérer l'établissement et l'utilisation du canal (CS) sécurisé en traitant et conservant un nombre imprédictible (UN), la clé de session (Kses), un numéro de session (Nses) généré à l'établissement du canal sécurisé (CS) et qui est lié au nombre imprédictible (UN) et à un compteur de transaction de la carte (2), ainsi qu'un numéro de séquence (Nseq) incrémenté à chaque commande envoyée au lecteur (1), au cours de chaque session.

10. Système selon une des revendications 3 à 8. **caractérisé en ce que** le module de sécurité (41) de l'équipement fournisseur (4) est agencée pour stocker la clé de session (Kses) dans des moyens de mémorisation et/ou pour crypter la clé de session (Kses) à l'aide d'une clé, dite clé maître (KM), et la transmettre au serveur (40) pour stockage sous forme cryptée dans des moyens de mémorisation.

11. Système selon une des revendications 3 à 10. **caractérisé en ce que** le serveur (40) est agencé pour requérir du module de sécurité (41), à chaque transmission de données avec le lecteur (1), un cryptage/décryptage par ladite clé de session (Kses) des données transmises, le lecteur (1) étant agencé pour crypter/décrypter également les données échangées au cours de la transaction.

12. Procédé d'initialisation de transaction sécurisée en ligne, via au moins un réseau (RC) de communication, mis en oeuvre à l'aide d'au moins un lecteur selon l'une des revendications 1 et 2, **caractérisé en ce qu'**il comporte au moins une étape d'établissement (90) d'au moins un canal (CS) de communication sécurisé entre le module de sécurité (41) et le lecteur (1) qui est mise en oeuvre grâce aux étapes suivantes :
- génération (52) d'au moins une clé de session (Kses), par les moyens (12) de traitement du lecteur (1), en coopération avec la carte (2), puis cryptage de données à l'aide de cette clé de session (Kses),
- obtention (53), par le lecteur (1), à partir de la puce (20) de la carte (2), de données (D_chip) représentatives d'informations liées à la carte (2),
- transmission (54), du lecteur (1) au module de sécurité (41), des données (D_chip) représentatives d'informations liées à la carte (2) et des données cryptées à l'aide de la clé de session (Kses),
- génération (55), par le module de sécurité (41), de la clé de session (Kses) à partir d'au moins une clé de cryptage (CF) du module de sécurité (41) et des données (D_chip) reçues.

13. Procédé selon la revendication 12, **caractérisé en ce que** l'étape de génération (52) d'au moins une clé de session (Kses), par les moyens (12) de traitement du lecteur (1) est précédée par une étape de génération (51), par la puce (20) de la carte (2), d'au moins un cryptogramme (AAC, ARQC) à partir de la clé de cryptage (CF) stockée dans la puce (20) et de transmission de ce(s) cryptogramme(s) au lecteur (1) générant la clé de session (Kses) à partir de ce(s) cryptogramme(s) (AAC, ARQC).

14. Procédé selon une des revendications 12 et 13, **caractérisé en ce qu'**il comporte au moins une étape de saisie (50), par l'utilisateur de la carte (2), d'au moins un code d'identification personnelle (PIN) de l'utilisateur, et d'authentification de ce code par la puce (20) de la carte, cette étape de saisie/authentification (50) permettant au moins une étape de signature (60) de données par la puce (20).

15. Procédé selon une des revendications 12 à 14, **caractérisé en ce qu'**il comporte au moins une étape de réception et traitement, par les moyens (12) de traitement du lecteur (1), d'au moins une commande d'initialisation du canal (CS) sécurisé envoyée par lu module de sécurité (41), comprenant un nombre imprédictible (UN) et induisant l'interrogation de la puce (20) par le lecteur (1), pour obtenir au moins un cryptogramme (AAC, ARQC) et les données (D_chip) représentatives d'informations liées à la carte (2), cette étape permettant l'étape de génération (52) de la clé de session (Kses) servant à établir le canal (CS) de communication sécurisé et la transmission (54) au module de sécurité (41), d'une part, des données (D_chip) représentatives d'informations liées à la carte (2) et, d'autre part, et, d'autre part, lesdites données cryptées à l'aide cette clé de session (Kses), qui comportent des données relatives au nombre imprédictible (UN).

16. Procédé de transaction sécurisée en ligne, **caractérisé en ce qu'**il comporte les étapes du procédé d'initialisation selon l'une des revendications 12 à 15 et au moins une étape de transmission (91) de données entre le module de sécurité (41) et le lecteur (1), sous forme cryptée grâce à ladite clé de session (Kses).

17. Procédé selon la revendication 16, **caractérisé en ce que** le serveur (40) est agencé pour requérir du module de sécurité (41), à chaque étape de transmission (91) de données avec le lecteur (1), un cryptage/décryptage par ladite clé de session (Kses) des données transmises, le lecteur (1) étant agencé pour crypter/décrypter également les données échangées au cours de la transaction.

## Patentansprüche

1. Chipkartenleser (1) für gesicherte Online-Transaktionen über mindestens ein Kommunikationsnetz (RC) durch den Austausch von Daten, die für Transaktionen mit mindestens einer Ausrüstung (4) eines Dienstleistungsanbieters repräsentativ sind, umfassend mindestens einen Server (40), der dazu vorgesehen ist, Online-Transaktionen zu steuern, und mindestens ein Sicherheitsmodul (41), das diese Transaktionen im Zusammenwirken mit dem Leser (1) sichert, **dadurch gekennzeichnet, dass** er Verarbeitungsmittel (12) umfasst, die dazu vorgesehen sind:
- vor jeder Transaktion Daten mit mindestens einem Chip (20) mindestens einer gesicherten Karte (2) auszutauschen, um so genannte öffentliche Daten (D_chip), die für mindestens eine mit der Karte (2) verbundene Information repräsentativ sind, von dem Chip (20) zu erhalten und an das Sicherheitsmodul (41) zu übertragen,
- vor jeder Transaktion im Zusammenwirken mit dem Chip (20) mindestens einen Sitzungsschlüssel (Kses) zu erzeugen und an das Sicherheitsmodul (41) mit Hilfe dieses Sitzungsschlüssels (Kses) verschlüsselte Daten zu übertragen, damit das Sicherheitsmodul (41) den Sitzungsschlüssel (Kses) aus den erhaltenen öffentlichen Daten (D_chip) und dem mindestens einen Verschlüsselungsschlüssel (CF) berechnen kann,
- die für die Transaktion mit dem Sicherheitsmodul (41) repräsentativen Daten in durch den Sitzungsschlüssel (Kses) verschlüsselter Form auszutauschen, wodurch ein gesicherter Kommunikationskanal (CS) für die Transaktion gebildet wird.

2. Chipkartenleser (1) nach Anspruch 1, **dadurch gekennzeichnet, dass** die Verarbeitungsmittel (12) des Lesers (1) dazu vorgesehen sind, den Sitzungsschlüssel (Kses) im Zusammenwirken mit dem Chip (20) der Karte (2) zu erzeugen, wobei vom Chip (20) der Karte (2) gefordert wird, dass er auf Basis mindestens eines in dem Chip (20) gespeicherten Verschlüsselungsschlüssels (CF) mindestens ein Kryptogramm (AAC, ARQC) erzeugt, das vom Leser (1) verwendet wird, um den Sitzungsschlüssel (Kses) zu erzeugen, der zur Erstellung des gesicherten Kanals (CS) dient.

3. Gesichertes Online-Transaktionssystem über mindestens ein Kommunikationsnetz (RC), wobei das System mindestens eine Ausrüstung (4) eines Dienstleistungsanbieters besitzt, umfassend mindestens einen Server (40), der dazu vorgesehen ist, Online-Transaktionen durch den Austausch von Daten, die für Transaktionen mit mindestens einem Leser (1) einer Chipkarte (2) repräsentativ sind, zu steuern, wobei die Ausrüstung (4) auch mindestens ein Sicherheitsmodul (41) umfasst, das dazu vorgesehen ist, diese Transaktionen zu sichern, **dadurch gekennzeichnet, dass**:
- das System mindestens einen Chipkartenleser (1) nach einem der Ansprüche 1 und 2 umfasst,
- das Sicherheitsmodul (41) den Sitzungsschlüssel (Kses) auf Basis der erhaltenen öffentlichen Daten (D_chip) und mindestens eines Verschlüsselungsschlüssels (CF) berechnet,
- der Leser (1) und das Sicherheitsmodul (41) durch den Sitzungsschlüssel (Kses) die für die Transaktion repräsentativen Daten, die sie während der Transaktion austauschen, verschlüsseln und entschlüsseln, wodurch ein gesicherter Kommunikationskanal (CS) für die Transaktion gebildet wird.

4. System nach Anspruch 3, **dadurch gekennzeichnet, dass**:
- das Sicherheitsmodul (41) mindestens einen Schlüssel, Mutterschlüssel (CM) genannt, verwendet, der zur Erzeugung der Schlüssel (CF) der gesicherten Karten (2), die vom Dienstleistungsanbieter geliefert wurden, Tochterschlüssel (CF) genannt, gedient hat, wobei jede der gelieferten Karten (2) aus mindestens einer in den öffentlichen Daten (D_chip) enthaltenen Information identifizierbar ist,
- die Verarbeitungsmittel (12) des Lesers (1) an das Sicherheitsmodul (41) die öffentlichen Daten (D_chip) übertragen, um es ihm zu ermöglichen, den Verschlüsselungsschlüssel (CF) zu finden, der für die Berechnung des Sitzungsschlüssels (Kses) zu verwenden ist.

5. System nach einem der Ansprüche 3 und 4, **dadurch gekennzeichnet, dass** die Ausrüstung (4) des Dienstleistungsanbieters mindestens eine Datenbasis umfasst, die die Verschlüsselungsschlüssel (CF) der gesicherten Karten (2), die vom Dienstleistungsanbieter geliefert werden, speichert, wobei das Sicherheitsmodul (41) auf diese Datenbasis zugreift, um in Abhängigkeit von den vom Chipkartenleser (1) erhaltenen öffentlichen Daten (D_chip) den Verschlüsselungsschlüssel (CF) zu erhalten, der für die Berechnung des Sitzungsschlüssels (Kses) zu verwenden ist.

6. System nach einem der Ansprüche 3 bis 5, **dadurch gekennzeichnet, dass** der Leser (1) und die Anbieterausrüstung (4) über eine gesicherte Kommunikation nach einem Protokoll vom Typ SSL/TLS, in dem der gesicherte Kanal (CS) hergestellt ist, in Verbindung gebracht werden.

7. System nach einem der Ansprüche 3 bis 6, **dadurch gekennzeichnet, dass** die Verarbeitungsmittel (12) des Lesers (1) dazu vorgesehen sind, mindestens einen Initialisierungsbefehl des gesicherten Kanals (CS), umfassend eine unvorhersehbare Zahl (UN) und die Abfrage des Chips (20) durch den Leser (1) induzierend, von dem Sicherheitsmodul (41) zu empfangen und zu verarbeiten, um mindestens ein Kryptogramm (AAC, ARQC) und die für mit der Karte (2) verbundene Informationen repräsentativen Daten zu erhalten, wodurch es den Verarbeitungsmitteln (12) des Lesers (1) möglich ist, den Sitzungsschlüssel (Kses) zu erzeugen, der zur Herstellung des gesicherten Kommunikationskanals (CS) dient, und an das Sicherheitsmodul (41) einerseits die Daten (D_chip), die für mit der Karte (2) verbundene Informationen repräsentativ sind, und andererseits die mit Hilfe dieses Sitzungsschlüssels (Kses) verschlüsselten Daten zu übertragen, die Daten in Zusammenhang mit der unvorhersehbaren Zahl umfassen.

8. System nach einem der Ansprüche 3 bis 6, **dadurch gekennzeichnet, dass** die Initialisierung der Transaktion auf eine Übertragung mindestens eines Teils der für die Transaktion repräsentativen Daten an den Server (4) der Anbieterausrüstung (40) durch einen Drittserver (5), der eine Internet-Seite, an die der Benutzer angeschlossen ist, steuert, folgt.

9. System nach einem der Ansprüche 3 bis 8, **dadurch gekennzeichnet, dass** der Server (4) der Anbieterausrüstung (40) dazu vorgesehen ist, die Herstellung und die Verwendung des gesicherten Kanals (CS) zu steuern, wobei eine unvorhersehbare Zahl (UN), der Sitzungsschlüssel (Kses), eine Sitzungsnummer (Nses), die bei der Herstellung des gesicherten Kanals (CS) erzeugt wurde und mit der unvorhersehbaren Zahl (UN) und einem Transaktionszähler der Karte (2) verbunden ist, sowie eine Sequenznummer (Nseq), die bei jedem an den Leser (1) während jeder Sitzung gesandten Befehl inkrementiert wird.

10. System nach einem der Ansprüche 3 bis 8, **dadurch gekennzeichnet, dass** das Sicherheitsmodul (41) der Anbieterausrüstung (4) dazu vorgesehen ist, den Sitzungsschlüssel (Kses) in Speichermitteln zu speichern, und/oder den Sitzungsschlüssel (Kses) mit Hilfe eines Schlüssels, Masterschlüssel (KM) genannt, zu verschlüsseln und ihn an den Server (40) zur Speicherung in verschlüsselter Form in den Speichermitteln zu übertragen.

11. System nach einem der Ansprüche 3 bis 10, **dadurch gekennzeichnet, dass** der Server (40) dazu vorgesehen ist, von dem Sicherheitsmodul (41) bei jeder Datenübertragung mit dem Leser (1) eine Verschlüsselung/Entschlüsselung der übertragenen Daten durch den Sitzungsschlüssel (Kses) zu verlangen, wobei der Leser (1) dazu vorgesehen ist, auch die während der Transaktion ausgetauschten Daten zu verschlüsseln/entschlüsseln.

12. Verfahren zur Initialisierung einer gesicherten Online-Transaktion über mindestens ein Kommunikationsnetz (RC), das mit Hilfe mindestens eines Lesers nach einem der Ansprüche 1 und 2 eingesetzt wird, **dadurch gekennzeichnet, dass** es mindestens einen Schritt der Herstellung (90) mindestens eines gesicherten Kommunikationskanals (CS) zwischen dem Sicherheitsmodul (41) und dem Leser (1) umfasst, der mit Hilfe der folgenden Schritte eingesetzt wird:
- Erzeugung (52) mindestens eines Sitzungsschlüssels (Kses) durch die Verarbeitungsmittel (12) des Lesers (1) im Zusammenwirken mit der Karte (2), dann Verschlüsselung von Daten mit Hilfe dieses Sitzungsschlüssels (Kses),
- Erhalt (53) von Daten (D_chip), die für mit der Karte (2) verbundene Informationen repräsentativ sind, durch den Leser (1) von dem Chip (20) der Karte (2),
- Übertragung (54) vom Leser (1) an das Sicherheitsmodul (41) der Daten (D_chip), die für mit der Karte (2) verbundene Informationen repräsentativ sind, und der mit Hilfe des Sitzungsschlüssels (Kses) verschlüsselten Daten,
- Erzeugung (55) des Sitzungsschlüssels (Kses) durch das Sicherheitsmodul (41) aus mindestens einem Verschlüsselungsschlüssel (CF) des Sicherheitsmoduls (41) und den erhaltenen Daten (D_chip).

13. Verfahren nach Anspruch 12, **dadurch gekennzeichnet, dass** vor dem Schritt (52) der Erzeugung mindestens eines Sitzungsschlüssels (Kses) durch die Verarbeitungsmittel (12) des Lesers (1) ein Schritt der Erzeugung (51) mindestens eines Kryptogramms (AAC; ARQC) aus dem in dem Chip (20) gespeicherten Verschlüsselungsschlüssel (CF) durch den Chip (20) der Karte (2) und der Übertragung dieses(r) Kryptogramms(e) an den Leser (1), der den Sitzungsschlüssel (Kses) aus diesem(n) Kryptogramm(en) (AAC, ARQC) erzeugt.

14. Verfahren nach einem der Ansprüche 12 und 13, **dadurch gekennzeichnet, dass** es mindestens einen Schritt der Erfassung (50) durch den Benutzer der Karte (2) mindestens eines persönlichen Identifizierungscodes (PIN) des Benutzers und der Authentifizierung dieses Codes durch den Chip (20) der Karte umfasst, wobei dieser Schritt der Erfassung/Authentifizierung (50) mindestens einen Schritt der Datensignatur (60) durch den Chip (20) umfasst.

15. Verfahren nach einem der Ansprüche 12 bis 14, **dadurch gekennzeichnet, dass** es mindestens einen Schritt des Empfangs und der Verarbeitung durch die Verarbeitungsmittel (12) des Lesers (1) mindestens eines Initialisierungsbefehls des gesicherten Kanals (CS), der von dem Sicherheitsmodul (41) gesandt wird, umfassend eine unvorhersehbare Zahl (UN) und die Abfrage des Chips (20) durch den Leser (1) induzierend, umfasst, um mindestens ein Kryptogramm (AAC, ARQC) und die für mit der Karte (2) verbundene Informationen repräsentativen Daten (D_chip) zu erhalten, wobei dieser Schritt den Schritt der Erzeugung (52) des Sitzungsschlüssels (Kses), der zur Herstellung des gesicherten Kommunikationskanals (CS) dient, und die Übertragung (54) an das Sicherheitsmodul (41) einerseits der Daten (D_chip), die für mit der Karte (2) verbundene Informationen repräsentativ sind, und andererseits der mit Hilfe dieses Sitzungsschlüssels (Kses) verschlüsselten Daten ermöglicht, die Daten in Zusammenhang mit der unvorhersehbaren Zahl (UN) umfassen.

16. Gesichertes Online-Transaktionsverfahren, **dadurch gekennzeichnet, dass** es die Schritte des Initialisierungsverfahrens nach einem der Ansprüche 12 bis 15 und mindestens einen Datenübertragungsschritt (91) zwischen dem Sicherheitsmodul (41) und dem Leser (1) in verschlüsselter Form dank des Sitzungsschlüssels (Kses) umfasst.

17. Verfahren nach Anspruch 16, **dadurch gekennzeichnet, dass** der Server (40) dazu vorgesehen ist, von dem Sicherheitsmodul (41) bei jedem Datenübertragungsschritt (91) mit dem Leser (1) eine Verschlüsselung/Entschlüsselung des Sitzungsschlüssels (Kses) der übertragenen Daten zu verlangen, wobei der Leser (1) dazu vorgesehen ist, auch die während der Transaktion ausgetauschten Daten zu verschlüsseln/entschlüsseln.

## Claims

1. Chip card reader (1) for secure online transactions, via at least one communication network (RC), by exchanging data representing transactions with at least one item of equipment (4) of a service provider comprising at least one server (40) arranged in order to manage online transactions and at least one security module (41) securing these transactions in cooperation with said reader (1), **characterised in that** it comprises processing means (12) that are adapted to:
- exchange, prior to any transaction, data with at least one chip (20) of at least one secure card (2), in order to obtain data (D_chip), called public data, from said chip (20) and transmit it to said security module (41), said data representing at least one item of information associated with said card (2);
- generate, prior to any transaction and in cooperation with said chip (20), at least one session key (Kses) and transmit data encrypted using said session key (Kses) to said security module (41), so that said security module (41) can compute said session key (Kses) on the basis of said received public data (D_chip) and of at least one encryption key (CF);
- exchange the data representing the transaction with said security module (41) in a form encrypted by said session key (Kses), thus forming a secure communication channel (CS) for the transaction.

2. Chip card reader (1) according to claim 1, **characterised in that** said processing means (12) of said reader (1) are adapted to generate said session key (Kses) in cooperation with said chip (20) of said card (2), by requesting that said chip (20) of said card (2) generates, on the basis of at least one encryption key (CF) stored in said chip (20), at least one cryptogram (AAC, ARQC) used by said reader (1) to generate said session key (Kses) used to establish said secure channel (CS).

3. Secure online transaction system, via at least one communication network (RC), said system comprising at least one item of equipment (4) of a service provider comprising at least one server (40) arranged in order to manage online transactions by exchanging data representing transactions with at least one chip card (2) reader (1), said item of equipment (4) further comprising at least one security module (41) that is arranged in order to secure these transactions, **characterised in that**:
- said system comprises at least one chip card reader (1) according to any one of claims 1 to 2;
- said security module (41) computes said session key (Kses) on the basis of said received public data (D_chip) and of at least one encryption key (CF);
- said reader (1) and said security module (41) encrypt and decrypt, via said session key (Kses), the data representing the transaction that they exchange during the transaction, thus forming a secure communication channel (CS) for the transaction.

4. System according to claim 3, **characterised in that**:
- said security module (41) uses at least one key, called mother key (CM), that has been used to generate keys (CF), called daughter keys (CF), for said secure cards (2) supplied by said service provider, with each of said supplied cards (2) being identified on the basis of at least one item of information contained in said public data (D_chip);
- said processing means (12) of said reader (1) transmit said public data (D_chip) to said security module (41) to allow said module to find the encryption key (CF) to be used to compute said session key (Kses).

5. System according to any one of claims 3 and 4, **characterised in that** said item of equipment (4) of said service provider comprises at least one database storing said encryption keys (CF) of said secure cards (2) supplied by said service provider, said security module (41) accessing this database in order to find, as a function of said public data (D_chip) received from said chip card reader (1), the encryption key (CF) to be used to compute said session key (Kses).

6. System according to any one of claims 3 to 5, **characterised in that** said reader (1) and said item of equipment (4) of said provider are connected through a secure communication according to a protocol of the SSL/TLS type, within which said secure channel (CS) is established.

7. System according to any one of claims 3 to 6, **characterised in that** said processing means (12) of said reader (1) are arranged in order to receive from said security module (41) and to process at least one command for initialising said secure channel (CS) comprising an unpredictable number (UN) and causing said chip (20) to be polled by said reader (1), in order to obtain at least one cryptogram (AAC, ARQC) and said data (D_chip) representing information associated with said card (2), which allows said processing means (12) of said reader (1) to generate said session key (Kses) used to establish said secure communication channel (CS) and to transmit to said security module (41), on the one hand, said data (D_chip) representing information associated with said card (2) and, on the other hand, said data encrypted using said session key (Kses), which data comprises data relating to said unpredictable number (UN).

8. System according to any one of claims 3 to 6, **characterised in that** the initialisation of the transaction follows a transmission to said server (40) of said item of equipment (4) of said provider of at least part of the data representing the transaction, via a third party server (5) managing an Internet site to which the user is connected.

9. System according to any one of claims 3 to 8, **characterised in that** said server (40) of said item of equipment (4) of said provider is arranged in order to manage the establishment and the use of said secure channel (CS) by processing and maintaining an unpredictable number (UN), said session key (Kses), a session number (Nses) generated when said secure channel (CS) is established and which is associated with said unpredictable number (UN) and with a transaction counter of said card (2), as well as a sequence number (Nseq) that is incremented upon each command sent to said reader (1) during each session.

10. System according to any one of claims 3 to 8, **characterised in that** said security module (41) of said item of equipment (4) of said provider is arranged in order to store said session key (Kses) in storage means and/or to encrypt said session key (Kses) using a key, called master key (KM), and to send it to said server (40) in order to be stored in said storage means in an encrypted form.

11. System according to any one of claims 3 to 10, **characterised in that** said server (40) is arranged in order to request from said security module (41), upon each transmission of data with said reader (1), an encryption/decryption by said session key (Kses) of the transmitted data, said reader (1) being arranged in order to also encrypt/decrypt the data that is exchanged during the transaction.

12. Method for initialising a secure online transaction, via at least one communication network (RC), implemented using at least one reader according to any one of claims 1 and 2, **characterised in that** it comprises at least one step (90) of establishing at least one secure communication channel (CS) between said security module (41) and said reader (1), which step is implemented using the following steps:
- generating (52) at least one session key (Kses), by said processing means (12) of said reader (1), in cooperation with said card (2), then encrypting data using said session key (Kses);
- obtaining (53), by said reader (1), data (D_chip) from said chip (20) of said card (2) representing information associated with said card (2);
- transmitting (54), from said reader (1) to said security module (41), data (D_chip) representing information associated with said card (2) and data encrypted using said session key (Kses);
- generating (55), by said security module (41), said session key (Kses) on the basis of at least one encryption key (CF) of said security module (41) and of said received data (D_chip).

13. Method according to claim 12, **characterised in that** said step (52) of generating at least one session key (Kses), by said processing means (12) of said reader (1), is preceded by a step (51) of generating, by said chip (20) of said card (2), at least one cryptogram (AAC, ARQC) on the basis of said encryption key (CF) stored in said chip (20), and of transmitting said one or more cryptogram(s) to said reader (1) generating said session key (Kses) on the basis of said one or more cryptogram(s) (AAC, ARQC).

14. Method according to any one of claims 12 and 13, **characterised in that** it comprises at least one step (50) of entering, by the user of said card (2), at least one personal identification code (PIN) of said user and of authenticating said code by said chip (20) of said card, said step of entering/authenticating (50) allowing at least one step (60) of data signing by said chip (20).

15. Method according to any one of claims 12 to 14, **characterised in that** it comprises at least one step of receiving and processing, by said processing means (12) of said reader (1), at least one command for initialising said secure channel (CS) that is sent by said security module (41), which command comprises an unpredictable number (UN) and causes said chip (20) to be polled by said reader (1), in order to obtain at least one cryptogram (AAC, ARQC) and said data (D_chip) representing information associated with said card (2), said step enabling said step (52) of generating said session key (Kses) used to establish said secure communication channel (CS) and the transmission (54) to said security module (41) of, on the one hand, said data (D_chip) representing information associated with said card (2) and, on the other hand, said data encrypted using said session key (Kses), which data comprises data relating to said unpredictable number (UN).

16. Method for secure online transactions, **characterised in that** it comprises the steps of the initialisation method according to any one of claims 12 to 15 and at least one step (91) of transmitting data between said security module (41) and said reader (1) in an encrypted form by virtue of said session key (Kses).

17. The method according to claim 16, **characterised in that** said server (40) is arranged in order to request from said security module (41), upon each step (91) of transmitting data with said reader (1), an encryption/decryption by said session key (Kses) of the transmitted data, said reader (1) being arranged to also encrypt/decrypt the data that is exchanged during the transaction.
